(19) Europäisches Patentamt
European Patent Office
Office européen des brevets

(11) EP 4 603 452 A1

(12) EUROPEAN PATENT APPLICATION

(43) Date of publication:
20.08.2025 Bulletin 2025/34

(51) International Patent Classification (IPC):
*C01B 33/158* (2006.01)

(21) Application number: 24158232.9

(22) Date of filing: 16.02.2024

(52) Cooperative Patent Classification (CPC):
**C01B 33/1585;** C01P 2006/11; C01P 2006/12;
C01P 2006/14; C01P 2006/16

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Thermulon Ltd
Stockton-on-Tees County Durham TS21 3FD
(GB)

(72) Inventor: **The designation of the inventor has not
yet been filed**

(74) Representative: Abel & Imray LLP
Westpoint Building
James Street West
Bath BA1 2DA (GB)

(54) **IMPROVEMENTS IN AND RELATING TO SILICA GELS AND AEROGELS**

(57) A silica aerogel is disclosed, having a pore volume of at least about 4 cm$^3$/g, preferably at least about 5 cm$^3$/g, wherein the pore volume is determined by X-Ray Scattering (XRS) analysis ($V_{pore(XRS)}$). Optionally, the pore volume is of pores having a width of no more than about 100 nm. Optionally, the silica aerogel has a density of no more than about 0.21 cm$^3$/g, as determined by XRS analysis ($\rho_{XRS}$). Also disclosed is a silica lyogel suitable for forming the silica aerogel, and an admixture, insulation board or blanket comprising the silica aerogel and optionally fibres.

Fig. 4

EP 4 603 452 A1

**Description**

<u>Field of the Invention</u>

The present invention concerns a silica aerogel and insulation products comprising silica aerogels. More particularly, but not exclusively, this invention concerns a silica aerogel having a high small pore volume and/or low density. The invention also concerns silica aerogels having a thermal conductivity of from about 12 to about 20 mW/mK. The invention further concerns insulation products comprising such silica aerogels, for example silica aerogel powders, silica aerogel/fibre admixtures, insulation boards comprising silica aerogels and insulation blankets comprising silica aerogels.

<u>Background of the Invention</u>

Silica aerogels are ultra-porous, lightweight materials that have good thermal insulation properties. Silica aerogels find useful application in the construction industry, particularly as thermal insulation materials. Silica aerogels also find application as fire stopping materials and for the prevention of thermal runaway propagation, such as in electric vehicle battery packs, and in home appliance thermal insulation. Silica aerogels and materials comprising silica aerogels that are fireresistant, vapour permeable and are high-performing thermal insulators are desired.

Silica gels are continuous networks of silica ($SiO_2$) and are typically formed by a 'sol-gel process'. The hydrolysis and condensation reactions of the silica precursors result in the formation of siloxane bridges (Si-O-Si), which will lead to the formation of the silica nanostructured solid network. The term "sol-gel transition" refers to the transition from the liquid to the solid state. It's usually assumed that the hydrolysis and condensation reactions are complete when a sol reaches the gel point. The primary particles are produced during this event, which is followed by their aggregation into secondary particles and their eventual linking together in a three-dimensional network structure.

Alkoxysilanes are common silica gel precursors. In the initial stages of the sol-gel process the alkoxysilane is hydrolysed to form silanol groups (Si-OH). Siloxane bridges are then formed between a silanol of one molecule and a silanol or alkoxide (Si-OR) group of another molecule. As each alkoxysilane has up to four groups available to react in this way, the alkoxysilanes link together in a network to form silica nanoparticles. The nanoparticles are then linked to form a gel - the gel so formed being a solvent filled, three-dimensional network that spans the volume of the liquid in which the gel was formed. Thus, it will be understood that a gel is a nonfluid colloidal network or polymer network that is expanded throughout its volume by a liquid phase. In accordance with the 'Springer Handbook of Aerogels' (published by Springer Nature Switzerland AG 2023 and edited by M. A. Aegerter, N. Leventis, M. Koebel and S. A. Steiner III) and as used herein, the term 'gel' includes, for example, hydrogels, alcogels, organogels, solvogels and lyogels. It will be understood that: 'hydrogels' are gels with a pore fluid primarily comprising water; 'alcogels' are gels with a pore fluid primarily comprising an alcohol; 'organogels' are gels with a pore fluid primarily comprising an organic solvent; 'solvogels' are gels with a pore fluid primarily comprising an arbitrary solvent; 'lyogels' may be used as a synonym for a 'solvogel'. Silica aerogels are formed by removing the solvent from, e.g., a solvogel. Thus, a silica aerogel is a class of porous lightweight material (i.e. having a density of less than 200 mg/cm$^3$) derived from a silica gel, in which the liquid phase component has been replaced with a gas. Lightweight properties are achieved by avoidance of significant collapse of the gel structure during drying. The solvent may for example be removed by supercritical drying of such a solvogel. It is particularly desired to form low-density and high porosity silica aerogels. Thus, care is needed when removing the solvent from the solvogel to prevent collapse of the pores within the internal structure of the solvogel.

The sol-gel process using alkoxysilanes as the silica gel precursor is effective but alkoxysilanes are expensive and can be toxic and/or environmentally harmful. For those reasons, alternative methods of producing silica gels have been developed in which silica gels are prepared from water glass solutions.

Water glass is an aqueous solution of sodium (or potassium) silicate and is inexpensive and readily available. Sodium silicate exists in a number of possible stoichiometries including sodium metasilicate ($Na_2SiO_3$), sodium orthosilicate ($Na_4SiO_4$) and sodium polysilicate (($Na_2SiO_3)_n$). It will be understood that, as used herein, a water glass solution may additionally or alternatively comprise one or more other silica precursors, for example, organosiliconate salts such as potassium methylsiliconate and/or sodium methylsiliconate. Water glass is alkaline and is unreactive in water under basic conditions. However, gelation of water glass may be triggered by neutralising a water glass solution with an acid, hydrolysing the silicate to form silanol groups which are reactive to other silicate molecules.

Although the water glass synthetic route to silica gels uses inexpensive starting materials, the drying process used to remove solvent from pores of the gel to form a silica aerogel may destroy the internal porous structure of the gel by pore collapse, shrinking or cracking. Pore collapse or cracking decreases the specific surface area of the aerogel and changes the pore structure, such as average pore size and pore-size distribution of the aerogel, which can affect the beneficial properties of aerogels such as insulation properties. It is particularly difficult to remove water from within the internal pore structure without damaging the internal pore structure because water has high surface tension. For this reason, a solvent exchange process is typically used to replace water with a lower surface tension organic solvent prior to drying, yet difficulties in preserving the pore structure of the aerogel remain.

Silica aerogels comprise unreacted silanol (Si-OH) groups on the surface of the gel. The silanol group makes silica aerogels hydrophilic, and water (for example from the air) may adsorb into the pores of the aerogel. Adsorption of water from the atmosphere can affect the thermal insulation properties of the aerogel and integrity of the aerogel over time. The presence of hydrophilic silanol groups on the surface of the gel may also affect the internal pore structure of the gel during synthesis by affecting the interaction of the gel and aqueous, polar and apolar solvents during gelation, solvent exchange and drying steps.

The hydrophobicity of silica aerogels may be increased by attaching hydrophobic groups to the surface silanols of the gel. Hydrophobic aerogels may be vapour permeable without adsorbing water, thus maintaining performance over time. Hydrophobic gels can allow drying at ambient pressure, avoiding the use of supercritical reactors.

Post-modification of silica gels to increase hydrophobicity is known, for example from US 3,015,645. Typically, silica gels are treated with a silylating agent, such as alkyl siloxanes or trimethylsilyl chloride (TMS-Cl), which reacts with surface silanol groups to increase hydrophobicity. US 7,470,725 B2 discloses a process of preparing organically modified aerogels by surface-modifying ion-exchanged hydrogels. In a first step, a hydrogel is prepared from sodium or potassium silicate and the hydrogel is ion exchanged. In a second step, the ion-exchanged hydrogel is directly treated with a silylating agent without first undergoing a solvent exchange step to remove water from the gel. WO 2008/143384 A1 discloses a method of manufacturing superhydrophobic silica-based powder from water glass. The method removes the need for ion exchange of the water glass prior to gelation by eliminating $Na^+$ along with water during a solvent exchange step post-gelation. Similarly, US 8,961,919 B2 describes a process for producing hydrophobic aerogels from non ion-exchanged water glass and hexamethyldisilazane. Further processes for producing hydrophobic aerogels using hexamethyldisilazane as silylating agent are disclosed in the following documents: WO2019/076977A1; S. Zhao, et al., "Phase transfer agents facilitate the production of super insulating silica aerogel powders by simultaneous hydrophobization and solvent- and ion-exchange", Chemical Engineering Journal 381 (2020) 122421; K.J. Lee et al., "Fast synthesis of spherical silica aerogel powders by emulsion polymerization from water glass", Chemistry Select 3 (2018) 1257-1261; M. de Fátima Júlio et al., "Superhydrophobic hybrid aerogel powders from waterglass with distinctive applications", Microporous Mesoporous Mater. 199 (2014) 29-39. The high cost and non-recyclable nature of hexamethyldisilazane means its use is challenging when producing an economically viable product at scale.

US 10,351,434 B2 discloses a method of preparing spherical silica aerogel granules with uniform size. Droplets of water glass solution are first uniformly dispersed with a uniform size in a non-aqueous solvent using a surfactant to form a water glass emulsion and then treated with a neutralising agent to form a silica sol. The non-aqueous solvent does not react with the silica gel precursor and is preferably a hydrophobic non-polar organic solvent such as hexane or cyclopentane. A gelling agent is then added to produce spherical silica gel granules which may, in further steps, be surface treated to increase the hydrophobicity of the gel.

US 2018/0044188 A1 discloses organically modifying aerogels by surface modifying a pre-formed gel. Surface modification of the gel occurs by treating the gel with acid, preferably hydrochloric acid, in the presence of a silylating agent. US 10,766,779 B2 discloses a three-stage method of preparing organically modified silica gels and aerogels. In a first stage, an emulsion is prepared, the emulsion comprising a basic polar phase of water and starting materials for silicatic gels and an apolar phase of a water-immiscible precursor of an active silylating agent. In a second stage, gel formation and ageing is commenced by lowering the pH of the emulsion. Gel formation is carried out at a pH of $\geq 7$, and most preferably at a pH of between 8 and 9, with the reaction mixture stirred while being held at 40 °C for an extended period. In a third stage, the pH of the emulsion is lowered further to simultaneously commence silylation and solvent exchange. The third, silylation stage modifies the free and accessible Si-OH groups of the silica gel that remain after gelation and ageing.

The process described in US 10,766,779 B2 enables the precursor of a silylating agent to be present in a pre-prepared emulsion also comprising the starting materials of the silicatic gels. Therefore, the silylating agent does not need to be added to the reaction mixture at a later stage, removing the need for an external sol formation step. Because the gelation and ageing step is carried out at a pH $\geq 7$, the precursor of the silylating agent remains inactive during gel formation and ageing, and is activated on completion of gel formation and ageing by lowering the pH of the solution simultaneously with solvent exchange. Thus, at least two separate acid addition steps are required. The process is reported to produce aerogel powders with thermal conductivities in excess of 18-mW/mK, and challenges exist in scaling the process, including for example reaction control, avoidance of excessive concentration gradients and reactor fouling. Multi-stage processes with sequential silylation and gelation are also disclosed in the following documents: L. Huber et al., "Fast and minimal-solvent production of super insulating silica aerogel granulate", Angew. Chem. Int. Ed. 56 (2017) 4753-4756; M.M. Koebel et al., "Breakthroughs in costeffective scalable production of super insulating, ambient-dried silica aerogel and silica-bio-polymer hybrid aerogels: from laboratory to pilot scale", J. Sol-Gel Sci. Technol. 79 (2016) 308-318; S. De Pooter et al., "Optimized synthesis of ambient pressure dried thermal insulating silica aerogel powder from non-ion exchanged water glass", J. Non-Cryst. Solids 499 (2018) 217-226; M. Firoozmandan et al., "Performance of water glass-based silica aerogel for adsorption of phenol from aqueous solution, J. Sol-Gel Sci. Technol. 79 (2016) 67-75.

The present invention seeks to provide improved silica aerogels, silica lyogel for such silica aerogels, and insulation products comprising such silica aerogels.

Summary of the Invention

The present invention provides, according to a first aspect, a silica aerogel. Optionally, the silica aerogel has a pore volume of at least about 4 cm$^3$/g, preferably at least about 4.5 cm$^3$/g, such as at least about 5 cm$^3$/g, wherein the pore volume is determined by X-Ray scattering (XRS). As used herein, analysis by X-Ray Scattering comprises combined Ultra-Small X-Ray Scattering (USAXS), Small Angle X-Ray Scattering (SAXS) and Wide Angle X-Ray Scattering (WAXS) analyses. Optionally, the analysis is of pores having a width of no more than about 100 nm, such as no more than about 70 nm. Thus, the pore volume may be the total volume of pores having a pore width of no more than 100 nm. It will be understood that 'pore width' and 'pore diameter' are used interchangeably. The present inventors have found that the unique silica aerogel of the present invention has an especially high small pore porosity (small pore porosity being porosity derived from pores having a width of no more than about 70 nm). Without wishing to be bound by theory, it is believed that such a high small pore porosity imparts especially useful thermal properties, for example providing a particularly effective insulating material. As used herein, and unless otherwise stated, the term 'pore' encompasses micropores, mesopores and macropores. It will be understood that a micropore is a pore having a diameter <2 nm, a mesopore is a pore having a diameter of 2-50 nm, and a macropore is a pore having a diameter >50 nm. In the present application, the term 'small pores' includes micropores, mesopores and macropores up to 70 nm in diameter. Optionally, the silica aerogel has a pore volume of from about 4 to about 10 cm$^3$/g, preferably about 4.5 to about 9 cm$^3$/g, such as about 5 to about 8.5 cm$^3$/g, wherein the pore volume is determined by X-Ray Scattering (XRS) (V$_{pore(XRS)}$), such as analysis of pores having a width of no more than about 100 nm.

It is further believed that the unique structure of the aerogel, in particular the high degree of silylation in the lyogel subsequently dried to form the aerogel, allows for a faster production time. More particularly, extensive silylation, including of smaller pores, in the lyogel allows for fast solvent exchange, allowing for faster overall production times.

Optionally, the silica aerogel has a density determined by XRS analysis of no more than about 0.21 g/cm$^3$, preferably no more than about 0.2 g/cm$^3$, such as no more than about 0.18 g/cm$^3$. It will be understood that density may also be denoted by the Greek letter rho ($\rho$), and thus density determined by XRS as $\rho$XRS. Optionally, the silica aerogel has a density as determined by XRS analysis of about 0.05 to about 0.21 g/cm$^3$, preferably about 0.08 to about 0.2 g/cm$^3$, such as about 0.1 to about 0.18 g/cm$^3$. It is believed that a low XRS density is also indicative of beneficial thermal performance, and it is believed that a low XRS density may be related to high porosity.

Optionally, the silica aerogel may be referred to as a nanoporous silica framework, for example comprising a network of silicon and oxygen atoms linked together by a -Si-O-Si- bonds.

Optionally, the silica aerogel is a hydrophobic aerogel. It will be understood that a hydrophobic aerogel is an aerogel formulated to repel water and not absorb moisture from the air. Hydrophobicity may be provided by, for example, hydrophobic functional groups bonded to the surface of the silica framework. Examples of such hydrophobic groups include silyl groups represented by the formula -SiRR'R" wherein at least one of R, R' and R" are an organic group comprising at least one SiC bond. Optionally, the silica aerogel is prepared by a sol-gel process in which a silica gel is formed in a liquid reaction mixture from silica starting materials and then solvent is removed from the gel to provide an aerogel product. Hydrophobisation (e.g silylation) is carried out prior to drying, thereby reducing or avoiding pore collapse. Optionally, the silica aerogel is a silylated silica aerogel (for example, the silica aerogel optionally comprises surface silyl functional groups derived from a silylating agent). A silylating agent is a reagent that replaces a reactive hydrogen (for example the reactive hydrogen of an alcohol, carboxylic acid, amine, amide, and sulfide) with a silyl group (-SiRR'R"). A silylating agent can be used to introduce functionality to a silica gel by replacing surface silanol groups (Si-OH) with a silyl group. Therefore, the silylating agent is a silylating agent for silanol groups. The silylating agent may be referred to as a surface modifying agent. As discussed herein, the silylating agent is preferably hydrophobic and thus functionalises the gel with hydrophobic groups by reacting with surface silanol groups. The silylating reagent may be referred to as a hydrophobising agent. Optionally, the silylating agent is apolar. Optionally, the silylating agent is hydrophobic. The silylating agent may comprise the silyl group - SiRR'R" wherein at least one of R, R' and R" are an organic group comprising at least one Si-C bond. Preferably, at least one of R, R' and R" is a saturated or unsaturated alkyl, preferably a C1-C4 saturated alkyl, most preferably a C1-C2 saturated alkyl (e.g. CH$_3$ or CH$_2$CH$_3$); optionally, at least one of R, R' and R" is a fluoro-substituted unsaturated alkyl, preferably a C1-C4 fluoro-substituted saturated alkyl, such as a C1-C2 fluoro-substituted saturated alkyl. R, R' and R" may be identical or different to one another.

In embodiments, the silylating agent optionally comprises at least one of a siloxane, a silazane, an alkoxy silane, a silylhalide or mixtures thereof. In embodiments, the silylating agent optionally comprises siloxane, preferably a disiloxane. Optionally, the siloxane comprises a monosiloxane of the formula R$^a$R$^{a'}$R$^{a''}$ Si-OH, wherein at least one of R$^a$, R$^{a'}$ and R$^{a''}$ are a saturated or unsaturated alkyl. Preferably, each of R$^a$, R$^{a'}$ and R$^{a''}$ are a C1-C6 saturated alkyl. It will be understood that each of R$^a$, R$^{a'}$ and R$^{a''}$ may be identical or each of R$^a$, R$^{a'}$ and R$^{a''}$ may be different. Examples of suitable silanol silylating agents include trimethylsilanol (TMS-OH), triethylsilanol (TES-OH) and derivatives thereof, preferably TMS-OH. Preferably, the disiloxane comprises a disiloxane of the formula $R^aR^{a'}R^{a''}Si-O-SiR^bR^{b'}R^{b''}$, wherein at least one of $R^a$, $R^b$, $R^{a'}$, $R^{b'}$, $R^{a''}$ and $R^{b''}$ are a saturated or unsaturated alkyl. Preferably, each of $R^a$, $R^b$, $R^{a'}$, $R^{b'}$, $R^{a''}$ and $R^{b''}$ are a C1-C6 saturated alkyl. It will be understood that each of $R^a$, $R^b$, $R^{a'}$, $R^{b'}$, $R^{a''}$ and $R^{b''}$ may be identical or each of $R^a$, $R^b$, $R^{a'}$, $R^{b'}$, $R^{a''}$ and $R^{b''}$ may be different. Optionally, $R^aR^{a'}R^{a''}Si-O-SiR^bR^{b'}R^{b''}$ is symmetrical such that $R^a$ is equal to $R^b$, $R^{a'}$ is equal to $R^{b'}$, and $R^{a''}$ is equal to $R^{b''}$. Examples of suitable disiloxane silylating agents include hexamethyldisiloxane (HMDSO), hexaethyldisiloxane (HEDSO), hexapropyldisiloxane (HPDSO) and derivatives thereof. Hexamethyldisiloxane is a particularly preferred silylating agent. Examples of suitable silazanes are hexamethyldisilazane (HMDZ) and derivatives thereof. Examples of silylhalides are trimethylchlorosilane (TMCS) and triethylchlorosilane (TECS). As used herein, the term alkoxysilane includes salts (e.g. alkali metal salts) of alkoxysilanes. Suitable alkoxy silanes include potassium methylsiliconate, sodium methylsiliconate, methyltrimethoxysilane (MTMS) and methyltriethoxysilane (MTES). Siloxanes and silazanes undergo acid decomposition to form an activated silylating agent. Siloxanes are especially advantageous because they often exist in equilibrium with the corresponding activated silylating agent (silanol), with silanol formation being favoured by addition of an acid. That is especially the case for HMDSO and HEDSO, in which the relatively small alkyl substituents do not inhibit hydrolysis of Si-O bonds. For example, HMDSO hydrolyses under acidic conditions to form active compound trimethylsilanol(TMS-OH). Hexamethyldisiloxane is the condensation product of trimethylsilylating agents and is a poor silylating agent prior to activation. Under acidic, aqueous conditions, hexamethyldisiloxane is converted into two trimethylsilanol molecules (TMS-OH). Trimethylsilanol is able to react with a silanol group and thus silylate surface Si-OH groups of a silica gel. Under acidic conditions and in the presence of an aqueous phase, an equilibrium exists between HMDSO, TMS-OH and protonated transient species of the silane, such as TMS-OH$_2^+$. It is believed that this equilibrium hydrolysis/condensation of HMDSO allows for control of reactivity, since the position of the equilibrium allows for control of the availability of active silylating agent. HEDSO behaves similarly to HMDSO.

Preferably, the silica aerogel is prepared by a process in which silylation is performed simultaneously with gelation. By "simultaneously" it is meant that at least a portion of the formed gel undergoes silylation at the same time as at least some silica gel precursor is gelled. Without wishing to be bound by theory, it is believed that such simultaneous silylation and gelation allows for more effective small pore silylation, thereby helping to reduce or avoid small pore collapse during drying. In particular, it is thought that simultaneous gelation and silylation results in silylating agent being able to access silanol groups within the entire range of pores as silica gel forms, and thus even small pores may be functionalised, whereas usually smaller pores are inaccessible to future or separate silylation steps. This is in contrast to a process in which silylation occurs after gelation and in which it is harder for silylating agent to access internal pores (resulting in silylation being limited to the surfaces of large/easily accessible pores and the external surface of the nanoparticles under industrially applicable processing times and conditions). Yet further, internal pore silylation is believed to result in a gel with an improved hydrophobicity of the internal structure of the aerogel, itself helping to prevent any residual aqueous phase from becoming entrained in the network during synthesis, and thus preventing cracking, shrinkage or pore collapse during drying. The resulting aerogels have low thermal conductivity, which is thought to be at least in part attributable to the uniformity of size of the internal pores and the density of the aerogel. Additionally, the hydrophobicity of the gel reduces water adsorption from the atmosphere by the aerogel, thereby helping to maintain a low thermal conductivity over time. In particular, it is believed that gel hydrophobicity helps to avoid cycles of atmospheric water adsorption. A suitable method for preparing silica gels according to the present invention is described in the co-pending European patent application filed on the same day as the present application under the agent's reference P038719EP, the contents of which are incorporated herein by reference. In particular, that European patent application discloses a process in which silylating agent is activated by acid prior to contact with a solution of silica gel precursor (such as water glass). It will be understood that by activating the silylating agent it is meant that the silylating agent is activated from an unreactive silylating agent to a silylating agent that is reactive with a silanol (Si-OH) group. The reactive species from the activated silylating agent may react with a surface silanol group of silica gel being formed from silica gel precursors. It will be understood that under acidic conditions, at least a portion of gel silanol groups may be protonated, e.g. to form Si-OH$_2^+$. Prior to activation, the silylating agent is unreactive with a silanol group or only reacts very slowly. Pre-activation of silylating agent has been found to provide a silica aerogel product having a particularly high small pore porosity. Such a process may be especially effective when the silylating agent is HMDSO and/or HEDSO. Thus, the silica aerogel optionally comprises functional groups derived from HMDSO and/or HEDSO, such as silyl groups having the formula -SiRR'R", wherein each of R, R' and R" is independently -CH$_3$ and/or -CH$_2$CH$_3$, optionally wherein R, R' and R" is CH$_3$. It is believed that the ready activation of siloxanes to form the corresponding silanol in the presence of an acid allows for particularly effective hydrophobisation in smaller pores during gelation, especially in the case of HMDSO and HEDSO. Furthermore, the relatively low carbon content of HMDSO and HEDSO (compared to, for example, HPDSO and higher alkyl siloxanes) helps to maintain a relatively low level of carbon in the hydrophobised gel, which is especially useful when the gel is used to form aerogels for insulation where high fire resistance is desired. Improved internal pore hydrophobisation is believed to also facilitate better progression of the solvent front through the gel during phase transfer, reducing overall process time. The siloxane/silanol equilibrium also facilitates convenient pre-activation of the silylating agent when silylating agent is included in the second mixture (comprising acid).

Optionally, the silylating agent optionally does not comprise silazanes, and in particular the silylating agent does not comprise HMDZ. Although silazanes such as HMDZ can be efficient silylating agents, HMDZ produces ammonia as a byproduct of the silylation reaction which must be treated downstream, increasing costs. Furthermore, silazane activation is not a reversible reaction, and so unused, activated HMDZ cannot be recycled back to HMDZ for re-use in the process. Yet further, HMDZ is typically required to be used in excess, exacerbating wastage and cost. In embodiments, the silylating agent optionally does not comprise silylhalides, in particular chlorosilyls such as trimethylchlorosilane (TMCS). While TMCS is a highly reactive silylating agent, its use typically increases process costs and results in production of HCl as a by-product (which must be removed and/or requires use of specialist equipment, e.g. ceramic lined reactors). Optionally, the silica aerogel is free from chloride (e.g. free from chloride-containing contaminants), for example free from halides (e.g. free from halide-containing contaminants). It will be understood that the aerogel is free from a material when it comprises no more than 0.1 wt%, such as no more than 0.01 wt%, for example no detectable amount, of the material, based on the weight of the aerogel.

Optionally, the silica aerogel has a carbon content determined by $^1$H NMR spectroscopy of from about 2 wt% to about 25 wt%, preferably from about 5 wt% to about 15 wt%. Optionally, said carbon content is at least partially derived from silyl functional groups. Optionally, the silica aerogel comprises carbon derived from a surfactant. Optionally, the silica aerogel comprises a surfactant, such as surfactant remaining from the process used to prepare the silica aerogel. As explained in the co-pending European application referred to hereinabove, it has been found that use of a surfactant during aerogel synthesis can provide an improvement in thermal performance of the product.

Optionally, the silica aerogel is prepared using a silica gel precursor. It will be understood that a silica gel precursor provides the units or monomers from which a silica gel is formed. For example, the silica gel precursor may be a starting material for $[SiO_{4/2}]$ units. Optionally, the silica gel precursor is basic, for example the silica gel precursor is an alkali silicate. Optionally, the silica gel precursor does not substantially hydrolyse under basic conditions. It will be understood that the hydrolysis of silica gel precursors is an equilibrium and that when the silica gel precursor does not substantially hydrolyse under basic conditions the position of equilibrium lies towards the unhydrolysed silica gel precursor. Alkali silicates, such as sodium silicate, do not substantially hydrolyse under such basic conditions, and so acidic conditions or at least a reduction in basicity is required to initiate gelation. Optionally, the silica gel is prepared by acid catalysed gelation, for example in an aqueous solution. Optionally, the acid is an organic acid or an inorganic acid, preferably an inorganic acid (such as an aqueous acid). Optionally, the inorganic acid is a mineral acid. Mineral acids include nitric acid, sulfuric acid, phosphoric acid and hydrochloric acid. Most preferably the acid is nitric acid. Optionally, the acid is not hydrochloric acid. Hydrochloric acid can corrode the reactor in which the process is taking place and can also result in the production of chlorine gas. It is particularly preferred to use a combination of nitric acid with HEDSO and/or HMDSO because side products such as HCl, $Cl_2$ and ammonia are not produced by their reaction.

The silica aerogel comprises $[SiO_{4/2}]$ units and the silica gel precursor comprises a starting material for the repeating units $[SiO_{4/2}]$ of the silica aerogel. Additionally, the silica aerogel may comprise $[R_xSiO_{(4-x)/2}]$ units wherein x=1 or 2, in which case the silica gel precursor may comprise starting material for the $[R_xSiO_{(4-x)/2}]$ units. R may be selected from any one of: hydrogen, linear alkyl, branched alkyl, cyclic alkyl, aromatic, heteroaromatic or alkylene group. R may be substituted or unsubstituted. Each of R may be identical, or may be different. It is particularly preferred if at least one R group is an organic group meaning that at least one Si-C bond is present, preferably a hydrophobic organic group, most preferably a C1-C6 saturated or unsaturated alkyl, and in particular methyl, ethyl or propyl.

Optionally, the silica gel precursor comprises a silicate or alkoxysilane, or mixtures thereof. It will be understood that a silicate has the general formula $[SiO_{4-x}]_n^{(4-2x)-}$ wherein $0 \leq x < 2$, and includes orthosilicate ($SiO_4^{4-}$) (x = 0, n = 1) and metasilicate $SiO_3^{2-}$ (x = 1, n = 1) and pyrosilicate $Si_2O_7^{6-}$ (x = 0.5, n = 2). It will be understood that an alkoxysilane has the general formula $[Si(OR)_xO_{(4-x)}]^{(4-x)-}$ units wherein x = 1-4 and OR is an alkoxy group. One or more counterions may be present, for example sodium, potassium, calcium, aluminium, gallium, indium or zinc counterions. Thus, the silicate may be in the form of a metal silicate. Optionally, the silica gel and/or silica aerogel product comprises counterions originating from the silica gel precursor. For example, if the silica gel precursor comprises sodium and/or potassium counterions, the silica gel/silica aerogel optionally comprises a detectable amount of said sodium and/or potassium. Optionally, the silica gel and/or silica aerogel product comprises a detectable amount of a salt derived from counterions present in the silica gel precursor and acid used to initiate gelation and/or silylation. Optionally, the silica gel/silica aerogel product comprises $NaNO_3$ and/or $KNO_3$, which may be an indicator of the use of a sodium silicate or potassium silicate such as water glass being used as the silica gel precursor and nitric acid being used as the acid, such components being detectable by XRS for example.

Optionally, the silica gel precursor is derived from waste glass or other recyclable glass and/or silica sources. Optionally, the silica gel precursor is derived from one or more clays, such as aluminosilicate clays.

Optionally, when the silica gel precursor comprises a silicate, the silicate is an alkali metal silicate. Optionally, the silica gel precursor comprises sodium silicate and/or potassium silicate. Preferably, the sodium silicate and potassium silicate are provided in solution in a water-containing polar phase (e.g. aqueous phase). Sodium silicate and potassium silicate in water are commonly referred to as water glass. Sodium silicate contains a mixture of sodium oxide ($Na_2O$) and silica ($SiO_2$) and is water soluble. Potassium silicate is similar with the sodium ions being replaced by potassium ions.

Optionally, the silica aerogel has an average primary particle diameter of at least about 4.5 nm, optionally at least about 5.2 nm, such as at least about 5.3 nm, as determined by XRS analysis. Optionally, the silica aerogel has an average primary particle diameter of from about 4.5 nm to about 8 nm, such as from about 5.2 nm to about 7 nm, for example from about 5.3 nm to about 6.5 nm, as determined by XRS analysis. Optionally, the silica aerogel has an average cluster diameter of at least about 35 nm, such as at least about 50 nm, as determined by XRS analysis. Optionally, the silica aerogel has an average cluster diameter of no more than about 150 nm, such as no more than about 100 nm, as determined by XRS analysis. Optionally, the silica aerogel optionally has an average cluster diameter of from about 35 to about 150 nm, such as about 50 to about 100 nm, as determined by XRS analysis. It will be understood that clusters may also be referred to as secondary particles. Without wishing to be bound by theory, it is believed that there may be a balance between smaller cluster sizes (which may lead to advantageous larger surface area) and cluster sizes large enough to avoid weakness in networks formed by the clusters in an aerogel powder. As disclosed in the Springer Handbook of Aerogels: "secondary particles define a large portion of the material's mesoporosity and in turn are microporous (and potentially mesoporous) in and of themselves, that is, contain internal pores (usually less than 2 nm in diameter) defined by a sub network of nanometer-sized constituent particles called primary particles". Optionally, the silica aerogel has a surface area of no more than about 800 $m^2/g$, optionally less than 650 $m^2/g$, such as no more than about 640 $m^2/g$, when determined by cross-cutting lines analysis of XRS data. Additionally or alternatively, the silica aerogel optionally has surface area of from about 400 to about 800 $m^2/g$, optionally about 450 to less than 650 $m^2/g$, such as from about 500 to about 640 $m^2/g$, by XRS cross-cutting lines analysis. Optionally, the silica aerogel has a surface area of at least about 900 $m^2/g$, such as at least 1180 $m^2/g$, when determined by the Porod evaluation of XRS data, referred to herein as 'Porod surface area'. Additionally or alternatively, the silica aerogel has a Porod surface area of from about 900 to about 1500 $m^2/g$, optionally 1180 to about 1400 $m^2/g$, such as from 1180 to about 1350 $m^2/g$. Optionally, the silica aerogel has a Porod surface area at least about 1.5 times, such as at least about 1.8 times, for example at least about 2 times, the surface area by XRS cross-cutting lines analysis.

Optionally, the silica aerogel has an average pore width in the range of from about 10 nm to about 30 nm, such as from about 12 nm to about 25 nm, when calculated by the method described herein using data obtained by XRS analysis.

Optionally, the silica aerogel has a surface area of no more than about 700 $m^2/g$, optionally no more than 660 $m^2/g$, such as from about 400 $m^2/g$ to 660 $m^2/g$, when measured by nitrogen sorption and analysed by Brunauer-Emmett-Teller (BET) theory, as described herein.

Optionally, the silica aerogel has a minimum pore width less than 6.5 nm, such as less than 6 nm, for example less than 5 nm, as determined by nitrogen sorption analysis. It will be understood that minimum pore width is the smallest pore size detected by nitrogen sorption analysis. Thus, an aerogel having a minimum pore width less than 5 nm must comprise pores having a width below 5 nm. Additionally or alternatively, the silica aerogel has a pore volume of at least 0.01 $cm^3/g$ for pores having a pore width below 6.5 nm, such as less than 6 nm, for example less than 5 nm, as determined by nitrogen sorption analysis.

Optionally, the silica aerogel has: (i) a positive gradient in a double-logarithmic plot of differential scattering cross-section $m^{-1} \cdot d\sigma/d\Omega$, vs scattering vector q for values of q below 0.1 $nm^{-1}$ by XRS, (ii) an identifiable adsorption branch crossover point (V2) in a nitrogen sorption isotherm obtained by nitrogen sorption analysis, (iii) an identifiable desorption breakthrough point (V4) in a nitrogen sorption isotherm obtained by nitrogen sorption analysis, and/or (iv) extrapolation to p/p0=1 (V3) for nitrogen sorption data obtained by nitrogen sorption analysis covers substantially the whole pore volume (e.g. at least 99 vol%, such as at least 99.5 vol%, for example about 100 vol%) of the aerogel; preferably wherein the silica aerogel has an identifiable adsorption branch crossover point (V2) in a nitrogen sorption isotherm obtained by nitrogen sorption analysis. It is believed that the presence of larger pores (i.e. pores having a width > 100 nm) can preclude identification of V2 or V4 and/or result in extrapolation to p/p0=1 failing to cover substantially the whole pore volume. Additionally or alternatively, the silica aerogel has one or more of: (i) a surface area of at least about 900 $m^2/g$, such as at least about 1000 $m^2/g$ when determined by the Porod evaluation of the XRS data, for example from about 900 to about 1400 $m^2/g$, optionally from about 1000 to about 1350 $m^2/g$, when determined by the Porod evaluation of the XRS data; (ii) an average cluster diameter of at least about 35 nm, such as at least about 50 nm, estimated by the analysis of XRS data, for example from about 35 nm to about 250 nm, optionally from about 50 nm to about 200 nm, estimated by the analysis of XRS data; (iii) a surface area of no more than about 700 $m^2/g$, such as no more than about 680 $m^2/g$, by nitrogen sorption analysis, for example from about 400 to about 700 $m^2/g$, optionally from about 500 to about 680 $m^2/g$, by nitrogen sorption analysis; (iv) a density of at least 0.2 $g/cm^3$, by nitrogen sorption analysis, such as a density of from about 0.2 to about 0.3 $g/cm^3$, by nitrogen sorption analysis; (v) a pore volume of no more than about 4.8 $cm^3/g$, such as no more than about 4.4 $cm^3/g$, by nitrogen sorption analysis ($V_{pore(N2)}$), such as from about 2.6 to about 4.8 $cm^3/g$, optionally from about 3 to about 4.4 $cm^3/g$, by nitrogen sorption analysis ($V_{pore(N2)}$); and/or (vii) an average pore width of no more than 26.5 nm, such as no more than 26 nm, by nitrogen sorption analysis, such as from about 18 nm to 26.5 nm, optionally from about 20 to 26 nm, by nitrogen sorption analysis. A double-logarithmic plot of differential scattering cross-section $m^{-1} \cdot d\sigma/d\Omega$, vs scattering vector q refers to analysis of XRS data obtained by the method disclosed herein. Such a plot is believed to provide information on pore sizes in an aerogel sample. Without wishing to be bound by theory, it is believed that a negative gradient in the region of q below 0.1 $nm^{-1}$ may be indicative of the presence of a significant number of larger pores, such as pores > 100 nm in width. It will be understood that having a positive gradient in the region q < 0.1 $nm^{-1}$ means that the differential scattering cross-section is increasing with increasing q in the region of the plot below q = 0.1 $nm^{-1}$. Additionally or alternatively, in a double-logarithmic plot of differential scattering cross-section $m^{-1} \cdot d\sigma/d\Omega$, vs scattering vector q, a maximum vertex is observed between q = 0.1 $nm^{-1}$ and q = 1 $nm^{-1}$, a maximum vertex being a point where the curve changes from a positive gradient (upward trajectory) to a negative gradient (downward trajectory).

Optionally, the silica aerogel has a thermal conductivity of no more than about 20 mW/mK, such as a thermal conductivity of from about 12 to about 20 mW/mK, preferably from about 15 to about 18 mW/mK. Additionally or alternatively, the silica aerogel optionally has an average pore diameter of from about 2 to about 70 nm, preferably about 5 to about 50 nm, by nitrogen sorption analysis. Additionally or alternatively, the silica aerogel optionally has a pore volume of from about 2 to about 5 $cm^3/g$, preferably about 3.5 to about 5 $cm^3/g$, by nitrogen sorption analysis ($V_{pore(N2)}$). Additionally or alternatively, the silica aerogel optionally has a surface area of from about 400 to about 900 $m^2/g$, preferably about 550 to about 800 $m^2/g$, by nitrogen sorption analysis ($S_{BET}$). Additionally or alternatively, the silica aerogel has a tap density of from about 0.08 to about 0.3 g/mL, preferably about 0.1 to about 0.15 g/mL. Optionally, the silica aerogel has a $V_{p/p0=1}$ of no more than about 3100 $cm^3/g$, such as no more than about 3000 $cm^3/g$, for example no more than about 2900 $cm^3/g$, as measured by nitrogen sorption analysis. Additionally or alternatively, the silica aerogel has a $V_{p/p0=1}$ of from about 1800 to about 3100 $cm^3/g$, such about 2000 to about 3000 $cm^3/g$, for example about 2200 to about 2900 $cm^3/g$, as measured by nitrogen sorption analysis. Optionally, the silica aerogel has a $PVD_{max}$ of no more than about 0.25 $cm^3/g \cdot nm$, such as no more than about 0.2 $cm^3/g \cdot nm$, for example no more than about 0.15 $cm^3/g \cdot nm$, as determined by nitrogen sorption analysis with correction according to the method disclosed herein. Additionally or alternatively, the silica aerogel optionally has a $PVD_{max}$ of from about 0.05 to about 0.25 $cm^3/g \cdot nm$, such about 0.08 to about 0.2 $cm^3/g \cdot nm$, for example about 0.1 to about 0.15 $cm^3/g \cdot nm$, as determined by nitrogen sorption analysis with correction according to the method disclosed herein. Optionally, the silica aerogel has a $PVD_{0.5}$ of no more than about 0.15 $cm^3/g \cdot nm$, such as no more than about 0.1 $cm^3/g \cdot nm$, for example no more than about 0.08 $cm^3/g \cdot nm$, as determined by nitrogen sorption analysis with correction according to the method disclosed herein. Additionally or alternatively, the silica aerogel optionally has a $PVD_{0.5}$ of from about 0.02 to about 0.15 $cm^3/g \cdot nm$, such from about 0.04 to about 0.1 $cm^3/g \cdot nm$, for example about 0.05 to about 0.08 $cm^3/g \cdot nm$, as determined by nitrogen sorption analysis with correction according to the method disclosed herein. Optionally, the silica aerogel has a $d_{min(0.5)}$ of no more than about 11 nm, such as no more than about 10 nm, for example no more than about 8 nm, as determined by nitrogen sorption analysis with correction according to the method disclosed herein. Additionally or alternatively, the silica aerogel optionally has a $d_{min(0.5)}$ of from about 5 to about 11 nm, such as about 6 to about 10 nm, for example about 6.5 to about 8 nm, as determined by nitrogen sorption analysis with correction according to the method disclosed herein. Optionally, the silica aerogel has a $d_{max(0.5)}$ of at least about 30 nm, such as at least about 34 nm, for example at least about 38 nm, as determined by nitrogen sorption analysis with correction according to the method disclosed herein. Additionally or alternatively, the silica aerogel has a $d_{max(0.5)}$ of from about 30 to about 70 nm, such as from about 34 to about 60 nm, for example from about 38 to about 55 nm, as determined by nitrogen sorption analysis with correction according to the method disclosed herein. Optionally, the silica aerogel has a $d_{range(0.5)}$ of at least about 18 nm, such as at least about 25 nm, for example at least about 30 nm, as determined by nitrogen sorption analysis with correction according to the method disclosed herein. Additionally or alternatively, the silica aerogel has a $d_{range(0.5)}$ of from about 19 to about 65 nm, nm, such as about 25 to about 50 nm, for example about 30 to about 55 nm, as determined by nitrogen sorption analysis with correction according to the method disclosed herein

According to a second aspect of the invention, there is also provided a silica lyogel suitable for forming the silica aerogel of the first aspect of the invention, e.g. by drying. It is believed that the physical and chemical structure of the gel present in the lyogel as a result of gelation and silylation gives rise to the unique aerogel of the first aspect of the invention. It thus follows that a lyogel suitable for forming the aerogel of the first aspect of the invention shares unique characteristics of the aerogel that would result upon further processing. For example, the silica lyogel is optionally a silica aerogel precursor, for example a precursor suitable for forming the silica aerogel of the first aspect of the invention by solvent removal (e.g. drying). It will be appreciated that the lyogel may be subjected to other treatments, such as solvent exchange and/or washing prior to drying. Optionally, the silica lyogel has any chemical and/or physical structure as described with reference to the aerogel of the first aspect of the invention, except that pores of the lyogel are filled with a liquid rather than a gas. For example, the lyogel may correspond to the silica aerogel (e.g. may be a hydrophobic lyogel) that differs from the aerogel only in that its pores are filled with solvent (e.g. an apolar solvent, such as HMDSO). It will be appreciated that since the silica aerogel of the first aspect of the invention is prepared by drying a lyogel with minimal pore collapse, the lyogel precursor of the second aspect of the invention may have a structure substantially identical to that of the aerogel. Additionally or alternatively, the silica lyogel optionally has a porosity and average pore width at least matching, if not exceeding, that of the silica aerogel of the first aspect of the invention. Optionally, the lyogel is suitable for drying to remove solvent from silica gel, thereby forming the silica aerogel. Optionally, the silica lyogel is suitable for drying at ambient pressure. Optionally, the lyogel is suitable for drying at a temperature effective to evaporate solvent, and/or at a temperature below the flash point of the solvent. Optionally, the silica lyogel is suitable for drying at a temperature of between 25 °C and 300 °C such as between 100 °C and 200 °C, for example between 150 °C and 180 °C.

According to a third aspect, the present invention provides an admixture comprising a plurality of fibres and: a silica aerogel according to the first aspect of the invention, or a silica lyogel of the second aspect of the invention. In relation to the third aspect of the invention, the term 'silica gel' is used to refer both to silica aerogels and silica lyogels. Optionally, at least a portion of the silica gel is chemically bonded to at least a portion of the plurality of fibres. Optionally, the admixture comprises at least 5 wt% silica gel (e.g. at least 10 wt% silica gel) and/or at least 10 wt% fibres (.e.g at least 40 wt% fibres, such as at least 50 wt% fibres), based on the weight of the admixture. Optionally, the fibres are coated and/or uncoated fibres. Suitable fibre materials include inorganic fibres (e.g. glass fibres or mineral fibres) and organic fibres (e.g. polyester fibres, aramid fibres, nylon fibres, plant-based fibres).

According to a fourth aspect, there is provided an insulation product comprising a silica aerogel according to the first aspect of the invention. Optionally, the insulation product is an admixture of the silica aerogel and fibres, an insulation board or an insulation blanket (for example an insulation board or an insulation blanket comprising an admixture of the silica gel and fibres). It will be understood that an insulation board may be, for example, a rigid sheet of insulating material, while an insulation blanket may be, for example, a flexible sheet of insulating material. Optionally, the insulation product has a thermal conductivity of no more than about 25 mW/mK, such as a thermal conductivity of from about 12 to about 25 mW/mK, preferably from about 15 to about 20 mW/mK. Optionally, when the insulation product is (or comprises) an admixture of silica aerogel and fibres, at least a portion of the silica aerogel is chemically bonded to at least a portion of the fibres. Optionally, the admixture comprises at least 10 wt% silica gel and/or at least 10 wt% fibres, based on the weight of the admixture. Optionally, the fibres are coated and/or uncoated fibres. Suitable fibre materials include inorganic fibres (e.g. glass fibres or mineral fibres) and organic fibres (e.g. polyester fibres, aramid fibres, nylon fibres, plant-based fibres) or compositions of both (e.g. polymer-coated inorganic fibres).

According to a fifth aspect, there is provided an insulation product comprising a dried lyogel according to the second aspect of the invention. Optionally, the lyogel is provided in an admixture comprising the lyogel and a fibres, for example as described in relation to the third or fourth aspect of the invention. Optionally wherein the insulation product is an insulation board or an insulation blanket, for example as described in relation to the fourth aspect of the invention. Optionally, the insulation product has a thermal conductivity of no more than about 25 mW/mK, such as a thermal conductivity of from about 12 to about 25 mW/mK, preferably from about 15 to about 20 mW/mK.

It will of course be appreciated that features described in relation to one aspect of the present invention may be incorporated into other aspects of the present invention. For example, the process(es) of the invention may incorporate any of the features described with reference to the gel or aerogel of the invention and *vice versa.*

Description of the Drawings

Embodiments of the present invention will now be described by way of example only with reference to the accompanying schematic drawings of which:

Figure 1 shows a schematic of an embodiment of a process suitable for preparing a silica aerogel according to the invention;

Figure 2 shows an exemplary $N_2$ sorption isotherm illustrating the protocol followed for correction of $N_2$ sorption isotherms;

Figure 3 shows XRS (USAXS/SAXS/WAXS) scattering curves for Examples 2 and 3 and Comparative Examples 1 and 2;

Figure 4 shows double-logarithmic plots of the differential scattering cross-section $m^{-1} \cdot d\sigma/d\Omega$, vs the scattering vector, q, for Examples 2 and 3 and Comparative Examples 1 and 2;

Figure 5 shows the XRS (USAXS/SAXS/WAXS) scattering curve for Comparative Example 1 with annotation showing Porod evaluation;

Figure 6 shows the XRS (USAXS/SAXS/WAXS) scattering curve for Comparative Example 1 with annotation showing cross-cutting-lines evaluation;

Figure 7 shows a corrected $N_2$ sorption isotherm for the silica aerogel of Comparative Example 1 compared with the 'as measured' dataset;

Figure 8 shows pore size distribution for the silica aerogel of Comparative Example 1 derived via BJH analysis from the 'as measured' data set (from desorption branch only) and the corrected plot;

Figure 9 shows a corrected $N_2$ sorption isotherm for the silica aerogel of Comparative Example 2 compared with the 'as measured' dataset;

Figure 10 shows pore size distribution for the silica aerogel of Comparative Example 2 derived via BJH analysis from the 'as measured' data set (from desorption branch only);

Figure 11 shows a corrected $N_2$ sorption isotherm for the silica aerogel of Example 2 compared with the 'as measured' dataset;

Figure 12 shows pore size distribution for the silica aerogel of Example 2 derived via BJH analysis from the 'as measured' data set (from desorption branch only) and the corrected plot;

Figure 13 shows a corrected $N_2$ sorption isotherm for the silica aerogel of Example 3 compared with the 'as measured' dataset;

Figure 14 shows pore size distribution for the silica aerogel of Example 3 derived via BJH analysis from the 'as measured' data set (from desorption branch only) and the corrected plot.

## Detailed Description

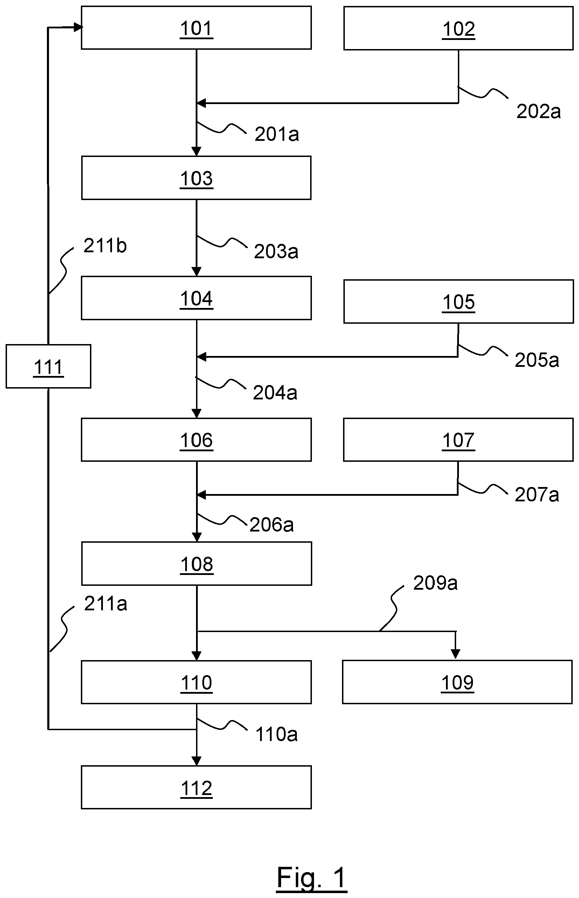

Figure 1 shows a schematic of an embodiment of a process suitable for preparing a silica aerogel according to the invention. The process comprises forming a first mixture 101 comprising a dispersion of HMDSO (silylating agent and solvent), water glass (silica gel precursor) and surfactant, and a second mixture 102 comprising a dispersion of HMDSO, nitric acid and a surfactant. It will be understood that the first mixture may alternatively be free from HMDSO, and that use of surfactant is optional. The first mixture is stirred 201a and the second mixture is added continuously 202a, thereby forming the third mixture 103, which is a dispersion of HMDSO, water glass, nitric acid and a surfactant. The third mixture 103 is aged with stirring 203a to form an aged third mixture 104. The aged third mixture 104 is stirred 204a and isopropanol (phase transfer agent) 105 is added 205a, providing a solvent exchanged third mixture 106. The solvent exchanged third mixture 106 is stirred 206a and additional nitric acid 107 is added 207a, providing a further acidified solvent exchanged third mixture 108. The polar phase 109 of the further acidified third mixture 108 is separated 209a, providing a mixture 110 comprising at least HMDSO and hydrophobised silica gel. The mixture 110 is dried 110a to provide a silica aerogel 112, and a mixture 111 comprising HMDSO collected 211a during drying 110a. HMDSO in mixture 111 is purified 211b and recycled to the first mixture 101. Not shown in Figure 1 is addition of fibres, which could for example be added to the first mixture 101, and/or prior to or during ageing 203a, and/or at any other time before drying 110a, thereby providing a product comprising silica aerogel 112 chemically bonded to the fibres. The overall process time from formation of a batch of the first mixture 101 to isolation of silica aerogel 112 may be under 10 hours, or even under 5 hours.

It will be appreciated that various steps and reaction components referred to in the foregoing embodiment are optional. For example, surfactant may or may not be present, other silylating agents, silica sources and/or acids may be used, the silylating agent may be absent from the first mixtures, and additional acid 107, recycling of silylating agent, and/or purification of silylating agent 211b could be omitted.

### Silica Gel and Silica Aerogel

The present invention provides silica aerogels. A silica aerogel is a product obtained from a silica gel after drying, i.e. when solvent is removed from the gel. A hydrophobised silica aerogel may be provided by reaction of surface silanol groups of the gel during gelation and optional further processing steps, with a silylating agent.

Preferably, the silylating agent is hexamethyldisiloxane (HMDSO) and/or hexaethyldisiloxane (HEDSO). It will be understood that when HMDSO or HEDSO are used as the silylating agent, a portion of the silanol surface groups of the silica gel is functionalised with a trimethylsilyl or triethylsilyl group. The silica aerogel may comprise from 6 wt% to 20 wt% carbon derived from the silylating agent, preferably 8 wt% to 14 wt% carbon derived from the silylating agent, based on the weight of the silica aerogel. It will be understood that the carbon present in the samples are from silyl groups, and that the silyl groups are bound to the surface through reaction with silanol groups of the silica gel.

When the silylating agent comprises carbon, for example when the silylating agent is HMDSO and/or HEDSO, the silica aerogel may have a carbon content of no more than 20 wt%, most preferably no more than 15 wt%. The carbon content of the silica aerogel may be determined using the $^1$H NMR spectroscopy method described herein. Providing such a silica aerogel is particularly advantageous because the carbon content of the aerogel may be within acceptable limits to meet fire safety standards while sufficient hydrophobisation of the aerogel is achieved (e.g. when the silylating agent is HEDSO or HMDSO, preferably HMDSO).

The silica aerogels may be in the form of silica aerogel particles. The silica aerogels may be granulate or powder. The particles may be substantially spherical.

The silica aerogels may have a tap density of from about 0.08 g/mL to 0.3 g/mL, optionally from about 0.10 to about 0.25 g/mL, most preferably from about 0.10 to about 0.15 g/mL. The tap density of the silica aerogel may be measured with a tap density volumeter as described herein.

The specific surface area ($S_{BET}$) of the silica aerogel may be measured by nitrogen sorption analysis and analysed by Brunauer-Emmett-Teller (BET) theory as described herein. $S_{BET}$ is measured according to ISO 9277. The $S_{BET}$ of the silica aerogel may optionally be from about 400 $m^2/g$ to about 750 $m^2/g$, for example from about 500 $m^2/g$ to

about 700 m$^2$/g, such as between about 550 and 660 m$^2$/g.

The silica aerogels may have a thermal conductivity of from about 12 to about 20 mW/mK, preferably from about 15 to about 18 mW/mK. The thermal conductivity may be measured using a guarded three-plate device as described herein. The thermal conductivity may be substantially stable over time such that the thermal conductivity decreases by no more than 5% over a period of time of at least 3 months, preferably at least 6 months.

**Process of preparing the silica gel**

Silica gels according to the present invention may be prepared by combining a silica gel precursor, water, silylating agent and acid to gel the silica gel precursor while simultaneously silylating the forming silica gel. The various components of the reaction mixtures used in the process will now be described. It will be understood that the various components described may be used in any combination.

The components may be provided in the form of one or more mixtures as will be described herein. For example, the silica gel precursor and water may be provided in a first mixture. Optionally, the first mixture may be in the form of a dispersion or emulsion comprising a first polar phase and a first apolar phase. Owing to the polarity of the silica gel precursor and water, it will be understood that the first polar phase comprises the silica gel precursor and water. The acid may be provided in a second, separate mixture. The silylating agent may be provided in either or both of the first and second mixture, preferably at least in the second mixture.

The first and second mixtures may be combined to form a third mixture in which the silica gel is formed and preferably simultaneously silylated. In forming the third mixture, the second apolar phase and an optional apolar phase present in the first mixture (i.e. a first apolar phase) combine to form a single, third apolar phase. Likewise, polar phases of the first and second mixtures (if present) (i.e. first polar phase and second polar phase) combine to form a single, third polar phase. The addition of the second mixture comprising acid to the first mixture results in the third mixture having a third polar phase having a pH less than the pH of the first polar phase of the first mixture. It will be understood that water (i.e. at least water from the first mixture) is also present in the third polar phase of the third mixture.

After simultaneous gelation and silylation of the silica gel, further processing steps may be implemented as described herein. Optionally, coated and/or uncoated fibres are contacted with the gel slurry at any stage after the third mixture is formed.

Further steps including ageing the silica gel slurry, further increasing the hydrophobicity of the silica gel, isolating the silica gel, and/or the silica gel may be dried to form an aerogel.

**Silica Gel Precursor**

The silica gel precursor comprises a starting material for the repeating units [SiO$_{4/2}$] of the silica gel. The silica gel precursor may comprise or be derived from water glass, waste glass (or other recyclable sources such as rice husk ash), alkoxysilanes (for example, potassium methylsiliconate, sodium methylsiliconate, tetraethoxysilane, tetramethoxysilane, methyltrimethoxysilane, and methyltriethoxysilane), clays (e.g. aluminosilicates), aerogels (for example aluminium/gallium/indium or zinc aerogels), and any mixture thereof. Preferably, the silica gel precursor comprises a silicate, alkoxysilane, or mixtures thereof. Preferably the silica gel precursor is water soluble. Preferably, the silica gel precursor comprises a silicate and the silicate is an alkali metal silicate. Most preferably, the silica gel precursor comprises sodium silicate and/or potassium silicate. Water glass is an aqueous solution of sodium silicate and/or potassium silicate.

Preferably, the silica gel precursor is provided as an aqueous solution. Optionally, the aqueous solution of the silica gel precursor comprises from 2 wt% to 15 wt% silica gel precursor based on the total weight of the aqueous solution. Optionally, the aqueous solution of silica gel precursor comprises from 4 to 10 wt% silica gel precursor based on the total weight of the aqueous solution. If the silica gel precursor is in the form of a salt, for example alkali metal silicate, it will be understood that the wt% of the silica gel precursor does not include the mass of any counterions present.

**Silylating agent**

The silylating agent replaces a reactive hydrogen of silanol groups on the surface of the gel with a silyl group (-SiRR'R"). Preferably, the silylating agent is a siloxane such as a disiloxane of the general formula R$^a$R$^{a'}$R$^{a''}$Si-O-SiR$^b$R$^{b'}$R$^{b''}$ wherein at least one of R$^a$, R$^b$, R$^{a'}$, R$^{b'}$, R$^{a''}$ and R$^{b''}$ are a saturated or unsaturated alkyl. Preferably, each of R$^a$, R$^b$, R$^{a'}$, R$^{b'}$, R$^{a''}$ and R$^{b''}$ are a C$_1$-C$_4$ saturated or unsaturated alkyl group, most preferably a C$_1$-C$_2$ saturated alkyl group. Optionally, the silylating agent comprises at least one of hexamethyldisiloxane (HMDSO), hexaethyldisiloxane (HEDSO), hexapropyldisiloxane (HPDSO), hexamethyldisilazane (HMDZ), trimethylchlorosilane (TMCS), triethylchlorosilane (TECS), methyltrimethoxysilane (MTMS), methyltriethoxysilane MTES and derivatives thereof. Most preferably, the silylating agent is hexamethyldisiloxane (HMDSO) and/or hexaethyldisiloxane (HEDSO), and/or collected and recycled derivatives thereof. It will be understood that recycling silylating agents, such as HMDSO and/or HMDSO, may result in silylating agent derivatives forming during an earlier reaction process and/or the collection process. For example, the silylating agent may optionally comprise non-symmetrical disiloxanes formed by reaction of activated silylating agent and solvent and/or phase transfer agent. Such non-symmetrical disiloxanes include the reaction product of HMDSO and isopropanol (IPA) referred to as TMS-O-IPA.

Preferably, the silylating agent is provided in the second mixture and is optionally present in the first mixture. The silylating agent may form the major component of the second apolar phase of the second mixture. For example, the silylating agent may comprise > 20 vol% of the second apolar phase of the second mixture, optionally > 50 vol% of the second apolar phase of the second mixture, for example > 90 vol%.

## Apolar phase

The apolar phase of the first mixture (the first apolar phase) may comprise an apolar solvent or a mixture of apolar solvents. The apolar phase of the first mixture may comprise one or more of the following apolar solvents: HMDSO, HMDZ, $C_6$-$C_{12}$ aliphatic hydrocarbon (hexane, heptane and octane are particularly preferred), $C_6$-$C_{12}$ aromatic hydrocarbon (toluene, and benzene are particularly preferred), TMS-Cl. Most preferably, the apolar phase of the first mixture comprises HMDSO and/or collected and recycled derivatives thereof.

Optionally, the second mixture comprises an apolar phase i.e. a second apolar phase. The second apolar phase may comprises one or more of the apolar solvents listed above in reference to the first apolar phase of the first mixture. When both the first mixture and second mixture comprise one or more apolar solvents, the third mixture will comprise a single apolar phase comprising each of the apolar solvents of the first and second mixture.

When the apolar phase of the first mixture and/or the optional apolar phase of the second mixture comprises HMDSO, HMDSO may be the major component of the apolar phase. It will be understood that if HMDSO and/or HEDSO is present, the HMDSO and/or HEDSO are apolar solvents and also silylating agents as described herein.

## Polar phase

The polar phase of the first mixture i.e. the first polar phase, comprises water. It may be that water is the sole polar solvent of the first polar phase and thus the first polar phase is water. Alternatively, the first polar phase may comprise a mixture of polar solvents including water and at least one other polar solvent such as a $C_1$-$C_{10}$ alcohol and/or acetone. When the first polar phase comprises water and at least one additional solvent, the first polar phase comprises > 50% by volume of water, optionally > 80% by volume of water, such as > 90% by volume of water.

The second mixture comprises an acid which may optionally be in the form of an aqueous acid solution. When the second mixture comprises an aqueous acid solution, the aqueous acid solution is itself a polar phase. In addition to the aqueous acid solution, the second mixture may comprise further polar solvents and thus the second mixture may comprise a second polar phase comprising the aqueous acid solution and one or more further polar solvents. The one or more polar solvents may be selected from the list recited above in relation to the first polar phase. If present, the polar phase(s) of the first mixture and polar phase(s) of the second mixture combine to form a single polar phase in the third mixture (the third polar phase).

## Acid

The acid may comprise an inorganic acid, such as a mineral acid, or an organic acid. The acid may comprise one or more acids from the following: $HNO_3$, HCl, $H_2SO_4$, $H_3PO_4$, $HClO_4$, HI, HBr, HF, and methanesulfonic acid.

Optionally, the acid is provided in the form of an acid solution, preferably an aqueous acid solution. The acid solution may have a molar concentration of from 1M to 16M, such as from 6M to 10M.

## Surfactants

One or more surfactants may be present in the first mixture to stabilise a dispersion or emulsion of the first polar phase and a first apolar phase. The second mixture may optionally comprise a surfactant. This may be particularly advantageous when the second mixture comprises polar and apolar phases (e.g. a second polar phase comprising an acid), and the second mixture is a dispersion or emulsion of the polar and apolar phases. In general terms, it will be understood that a surfactant may, for example, be any substance that reduces interfacial tension between a polar and an apolar phase, and/or a substance capable of stabilising an emulsion in the first, second and/or third mixtures. Additionally or alternatively, a surfactant may, for example, be a compound comprising one or more hydrophobic groups as well as one of more hydrophilic groups, such as a chemical compound or molecule that contains a hydrophobic (e.g. non-polar) part covalently connected to a polar hydrophilic (e.g. polar) part.

Suitable surfactants include, for example, ionic surfactants (e.g. cationic or anionic surfactants), non-ionic surfactants and/or zwitterionic surfactants. Optionally the surfactant is a non-ionic surfactant. Optionally, the first mixture, second mixture and/or third mixture comprises one or more ionic surfactants (e.g. cationic or anionic surfactants), non-ionic surfactants and/or zwitterionic surfactants. Optionally, the first mixture, second mixture and/or third mixture comprises one or more non-ionic surfactants. Suitable non-ionic surfactants include: sorbitan esters, polyethylene glycol oleyl ethers, alkoxylated alcohols, polymeric surfactants, ethoxylated surfactants, ethoxylated esters, polyethylene glycols and polyol esters (such as Sucrose Distearate, PEG 30 Dipolyhydroxystearate, glyceryl stearate, sorbitan isostearate, Steareth-2 and/or PEG-8 Distearate, Glyceryl Stearate and/or PEG-100 Stearate, Sorbitan Oleate and/or PEG-7 Hydrogenated Castor Oil), silicon based surfactants (such as Cetyl PEG/PPG-10/1 Dimethicone or fumed silica), and soybean lecithin.

## Ageing

Optionally, the process comprises ageing the silica gel slurry formed once the first and second mixtures are combined. The silica gel slurry may be aged for a period of time of between 1 minute and 240 minutes, preferably between 30 minutes and 120 minutes. During the ageing process, the silica slurry may be mixed or agitated. Optionally, the silica gel slurry is aged at a temperature of between 0 °C and 100 °C, preferably between 20 °C and 70 °C.

## Phase transfer

Optionally, the third mixture may be subjected to a phase transfer step. In the optional phase transfer step, a phase transfer agent is added to the third mixture, preferably after the ageing step.

Optionally, the third mixture and phase transfer agent are mixed for a period of time of between 1 and 270 minutes, such as between 20 and 120 minutes. Optionally the phase transfer step is carried out at a temperature of between 0 °C and 100 °C, preferably between 60 and 85 °C.

Optionally, the phase transfer agent comprises a polar solvent such as an alcohol. Particularly preferred phase transfer agents comprise one or more of the following polar solvents: isopropanol, n-propanol, ethanol, butanol and acetone. Additionally or alternatively, it will be understood that a phase transfer agent may for example be any substance that reduces interfacial tension between the third polar phase and the third apolar phase.

Additionally or alternatively, phase transfer may occur via ligand exchange.

## Additional Hydrophobisation

The process may comprise a second silylation step after the third mixture is formed. The process may further comprise a second acid addition step after the third mixture is formed to promote silylation of remaining surface silanol groups of the silica gel in the second silylation step. This step is particularly preferred when the silylating agent, such as HMDSO and/or HEDSO, is provided in excess such that unreacted silylating agent remains after the formation of the third mixture. Optionally, an acid is added to the third mixture to lower the pH, for example acid is added to the third mixture to reduce the pH of the solution to <2. Preferably, if a second acid addition step is used, the acid is added during and/or after the phase transfer step.

Following addition of the additional acid to the third mixture, the reaction mixture may be mixed for a period of time of between 1 minute and 360 minutes. Optionally, the reaction mixture is mixed at a temperature between 0 °C and 100 °C, preferably between 40 and 85 °C.

## Additives

One or more additives such as fibres, nanoparticles, opacifiers, microparticles, crosslinker agents and polymers may be added to the third mixture or gel slurry prior to and/or during ageing the slurry. It may be particularly preferred to include inorganic fibres (e.g. glass fibres or mineral fibres) and organic fibres (e.g. polyester fibres, aramid fibres, nylon fibres, plant-based fibres).

## Solvent exchange

The process may further comprise a solvent exchange step in which the solvent of the silica gel formed in the third mixture is replaced. The solvent exchange step may comprise adding one or more of the following solvents to the third mixture: water, alcohol (e.g. ethanol, isopropanol, alcohol mixtures), fluorinated ether, $CO_2$, apolar solvents (e.g. alkanes such as hexane and/or heptane), and/or a mixtures thereof. It will be understood that such solvent exchange may for example be in addition to solvent exchange carried out during a phase transfer step.

**Isolating silica gel and drying**

The silica gel may be isolated from the third mixture. Following isolation, the silica gel may be dried by removing solvent according to methods known in the art. For example, the solvent may be removed by drying the silica gel at ambient pressure and a temperature of between 25 °C and 300 °C, such as between 100 °C and 200 °C. Additionally or alternatively, the silica gel may be dried to form the silica aerogel by vacuum drying, freeze-drying, low temperature and high temperature supercritical drying.

**Applications**

Silica aerogels according to the present invention may find application in forming insulation materials such as insulation blankets, fire blankets, films, aerogel powders, foams, plasters and paints.

Examples

Materials used for the examples:

Sodium silicate solution (7.5 - 8.5% $Na_2O$; 25.5 - 28.5% $SiO_2$, Extra Pure, Supelco®, Merck), Hexamethyldisiloxane (HMDSO, 98+%, Thermo Scientific Chemicals), Sorbitane monooleate (Span 80, Sigma-Aldrich), Nitric Acid ($HNO_3$, 70%, d=1.42, Extra Pure, Fisher Chemical™), 2-Propanol (Isopropanol (IPA) $\geq$ 99.8%, Honeywell).

Preparation of water glass solution:

The water glass was diluted in glass containers with distilled water until a $SiO_2$ content of 6 wt% was obtained. The sodium silicate solutions were vigorously stirred.

Determination of carbon content:

The carbon content was determined by $^1$H Nuclear Magnetic Resonance (NMR) spectroscopy. The experiments were carried out according to Malfait, W. J., Verel, R., & Koebel, M. M. (2014), "Hydrophobization of silica aerogels: insights from quantitative solid-state NMR spectroscopy", The Journal of Physical Chemistry C, 118(44), 25545-25554. Briefly, the $^1$H NMR spectra were determined on a known mass of sample, loaded into 2.5 mm zirconia rotors that were spun at a magic-angle spinning (MAS) rate of 24 kHz. Single pulse $^1$H NMR spectra were acquired with a long recycle delay (15 s, >5*$T_1$, $T_1$ is typically <2s for silica aerogels) to ensure full relaxation and rotors were filled completely to ensure no differential excitation due to different positions in the rotor/coil. The spectrum of an empty rotor was also acquired using the same conditions and subtracted from the sample spectra to remove signal from the rotor/caps/probe-head. Three reference materials (adamantane, octakis(trimethylsiloxy)silsesquioxane (Q8M8) and tetrakis(trimethylsilyl)silane) were measured under the same conditions to convert absolute NMR intensities into mass loadings of hydrogen in the rotors. From these, the molar and mass loading of trimethylsilyl groups in the aerogel samples could be determined.

Determination of Tap Density:

The tap density was calculated from the respective mass and volume of the aerogel powders using a tap density volumeter with measurement cylinders from 100 to 250 $cm^3$ after 50000 taps.

Determination of the yield:

To determine the yield, the silica gel particles were dried and then weighed at room temperature.

Determination of the thermal conductivity:

The thermal conductivity of the silica aerogel powders were measured in a guarded three-plate device. The measurements were performed with a mean temperature of 20°C. The powder was slightly compressed into the sample holder in order to remove the air layers between the silica particles to avoid distortion by the thermal conductivity of standing air.

X-ray scattering (XRS) - structural properties:

The structural properties of the silica aerogels were determined using X-Ray scattering (XRS). As noted above, analysis by X-Ray Scattering comprises a combination of Ultra-Small X-Ray Scattering (USAXS), Small Angle X-Ray Scattering (SAXS) and Wide Angle X-Ray Scattering (WAXS). The XRS 'analyses were performed using a SAXS-point 1.0 instrument from Anton Paar using Cu-K$\alpha$ radiation ($\lambda$=0.154 nm). The scattering intensities were acquired with three detector sample distances, 108.6 mm for the Wide Angle X-ray Scattering (WAXS), 564.5 mm for the SAXS and 811.6 mm for the Ultra-Small X-ray Scattering (USAXS), forming a compounded scattering curve. All experiments were carried out under vacuum with prior degassing of the aerogels.

For the calculations, the assumption was made that the skeletal density for hydrophobised silica aerogels with high specific surface area is 1.8 g/cm$^3$. Skeletal density is also referred to as $\rho_s$ or $\rho_{solid}$. The absolute calibration and Porod evaluation were made according to the ISO 20804:2022 "Determination of the specific surface area of porous and particulate systems by small-angle X-ray scattering (SAXS)".

According to Scherdel et al., "Advances in the Development of Sol-Gel Materials Combining Small-Angle X-ray Scattering (SAXS) and Machine Learning (ML)", Processes 2021, 9(4), 672, the contents of which are incorporated herein by reference, it is possible to identify three regions with different slopes in the double-logarithmic plot of the differential scattering cross-section m$^{-1}$·d$\sigma$/d$\Omega$, vs the scattering vector, q, from a typical scattering curve of the investigated silica aerogels. The different slopes were fitted with I(q) = K·q$^{-D}$, and the q-values of the intersections between the different slopes are related to the cluster, $d_{cluster}$, and the particle size, $d_{particle}$. For the structure size, the relation d = 2$\pi$/q was applied. The specific surface area from the particle size (S/m_ccl) can be calculated by S/m_ccl = 6 / $d_{particle}$·$\rho_{skeletal}$, assuming spherical particles.

To calculate the density from XRS ($\rho_{XRS}$) for all structures within the measurement range (< ca. 160 nm), the Invariant, Q, and the material constant, C, were based on the ISO 20804. The following equation was used to determine the density from XRS, $\rho_{XRS}$ = $\rho_{skeletal}$ - Q/2$\pi^2$·C$^2$. For the determination of the pore volume, the relation $V_{pore}$ = 1/$\rho_{XRS}$ - 1/$\rho_{skeletal}$, was used. For the calculation of the pore width, the following equation was applied, $d_{pore}$ = 4·$V_{pore}$ /(S/m) (thus assuming cylindrical pore geometry). Pore volume as determined by XRS may also be referred to as $V_{pore(XRS)}$. Pore width as determined by XRS may also be referred to as $d_{pore(XRS)}$.

Nitrogen Sorption Analysis Measurements

The specific surface area ($S_{BET}$) was assessed by nitrogen gas sorption using ASAP 2020 from Micromeritics Instrument Corp. The samples were degassed for more than 12 hours at 100°C under vacuum. During the measurements very strict equilibration criteria were set, especially at high relative pressures p/p0 > 0.9 in order to fill the whole accessible pore volume within the measurement range. It will be understood that equilibration criteria are very strict when samples are allowed to completely equilibrate. Consequently, the total measurement for a single sample may be as long as one week. The $S_{BET}$ evaluation was based on the ISO 9277:2022, "Determination of the specific surface area of solids by gas adsorption - BET method". The correction of the isotherms (hysteresis) of deformed materials was based on the paper by Reichenauer, G. and G.W. Scherer, "Extracting the pore size distribution of compliant materials from nitrogen adsorption". Colloids and Surfaces A - Physicochemical and Engineering Aspects, 2001. 187: p. 41-50. The Barrett-Joyner-Halenda (BJH) method was used for the cumulative pore volume and pore size distribution (i.e. differentiation of cumulative pore volume). Skeletal density ($\rho_{solid}$) for the highly porous (hydrophobised) silica was assumed to be 1.8 g/cm$^3$. Bulk density ($\rho$) was determined from sample mass (after degassing) and total volume. Pore volume and average pore size were calculated analogous to as it was described on the XRS measurements. Thus, for the determination of the pore volume, the relation $V_{pore}$ = 1/$\rho$ - 1/$\rho_{solid}$, was used, and for the calculation of the pore width, the following equation was applied, $d_{pore}$ = 4·$V_{pore}$ /(S/m). Pore volume as determined by nitrogen sorption analysis may also be referred to as $V_{pore(N2)}$. Pore width as determined by nitrogen sorption analysis may also be referred to as $d_{pore(N2)}$.

Unless otherwise stated, measurements are taken at standard pressure and temperature (STP).

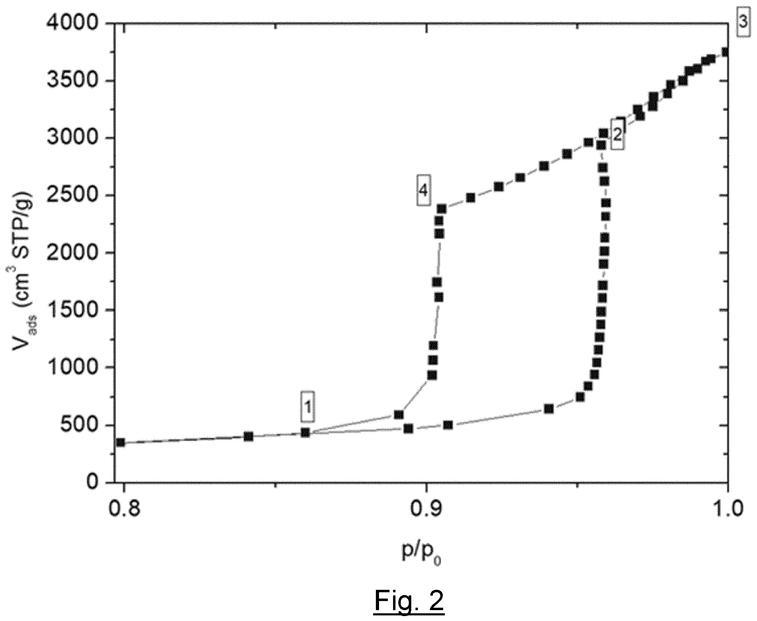

The following protocol was followed for the correction of the isotherm (the volumes used are in [cm$^3$/g STP]), with reference to the example isotherm shown in Figure 2. First, four values were extracted from the isotherm, as shown in Figure 2: Point (1) → V1, Point (2) → V2, Point (3) → V3 (extrapolated volume to p/p$_0$ = 1) and Point (4) → V4. As explained in the paper by Reichenauer, G., et al., the numbers mark the characteristic points of the hysteresis: point (1) onset of capillary condensation in mesopores; point (2) crossover in adsorption branch; point (3) maximum adsorption close to saturation; point (4) breakthrough upon desorption. Therefore, point (2) is located on the adsorption branch, while point (4) is located on the desorption branch.

The next step consists in calculating ΔL/L$_0$ from measured isotherm $V_{ads,meas}$, from the adsorption branch:

Between p/p$_0$ =0 and point (1):

$$\Delta L/L_0 = 0$$

Between point (1) and point (2):

$$\Delta L/L_0 = -\Delta L/L_{0, \text{ max Adsorption}} * (V_{ads,meas} - V1)/(V2-V1)$$

Between point (2) and point (3):

$$\Delta L/L_0 = \Delta L/L_{0, \text{ max Adsorption}} * ((V_{ads,meas} - V2)/(V3-V2)-1)$$

With:

$$\Delta L/L_{0, \text{ max Adsorption}} = 1-((V2*f+1/\rho_{solid})/(V3*f+1/\rho_{solid}))^{1/3}$$

$L_0$    initial length
$\Delta L$    length change
f    0.001546 density conversion factor for liquid nitrogen ($LN_2$)
$\rho_{solid}$ skeletal density

The next step corresponds to the correction via dilatometry $\Delta L/L_0$:
Correction of adsorbed Volume ($V_{ads,meas}$): The measured points in the hysterics of the isotherm are corrected in both directions of the graph.

$$V_{ads,korr} = (V_{ads,meas} +1/( \rho_{solid}*f))/(1-\Delta L/L_0)^3-1/(\rho_{solid}*f)$$

Correction of relative pressure $p/p_0$:

$$p/p_{0, \text{ korr}} = \exp(\ln(p/p_0)* V_{ads,meas} / V_{ads,korr})$$

The following references are relevant for the correction of the isotherms: G. Reichenauer, G.W. Scherer, Nitrogen adsorption in compliant materials, Journal of Non-Crystalline Solids, 277 (2000) 162-172; G. Reichenauer, G.W. Scherer, Nitrogen sorption in aerogels, Journal of Non-Crystalline Solids, 285 (2001) 167-174 and G. Reichenauer, G.W. Scherer, "Extracting the pore size distribution of compliant materials from nitrogen adsorption, Colloids and Surfaces A-Physicochemical and Engineering Aspects", 187 (2001) 41-50, the contents of which are incorporated herein by reference.
Following BJH analysis methodology, it will be understood that Pore Volume Distribution (PVD) is the first derivative of the cumulative volume adsorbed ($dV_{ads}$) with respect to the pore width (commonly expressed as dw), also referred to as dV/dw. PVD is expressed in units $cm^3/g \cdot nm$. Thus, measured PVD (also referred to as $PVD_{meas}$) is the first derivative of the measured cumulative volume adsorbed ($dV_{ads,meas}$) with respect to the pore width (commonly expressed as dw), while corrected PVD (also referred to as $PVD_{korr}$) is the first derivative of the corrected cumulative volume adsorbed ($dV_{ads,korr}$) with respect to the pore width (commonly expressed as dw).
Pore-size distribution (PSD) quantifies the relative pore volumes associated with different pore sizes. From a Pore Size Distribution (PSD) plot of pore width against pore volume distribution (PVD), it is possible to identify pore width at maximum pore volume distribution, $d_{PVDmax}$ (i.e. pore width at the highest PVD on the curve obtained by plotting pore width against PVD), and also the associated maximum pore volume distribution $PVD_{max}$ (i.e. PVD at the highest point on the curve obtained by plotting pore width against PVD). It is further possible to determine minimum ($d_{min(0.5)}$) and maximum ($d_{max(0.5)}$) pore widths at half of maximum pore volume distribution ($PVD_{0.5}$) (i.e. pore width values at $0.5 \times PVD_{max}$). It will be further appreciated that the pore width range at half of maximum pore volume can also be determined ($d_{range(0.5)}$) (i.e. $d_{max(0.5)}$ minus $d_{min(0.5)}$), which may also be referred to as the 'full width at half maximum' (FWHM) for the plot of pore width against PVD. As used herein, and unless otherwise stated, PVD, $PVD_{max}$, $PVD_{0.5}$, $d_{PVDmax}$, $d_{min(0.5)}$, $d_{max(0.5)}$ and $d_{range(0.5)}$ values disclosed herein are based on isotherms corrected according to the methodology described hereinabove (thus, values are based on a plot of $PVD_{korr}$ against pore width).

### Example 1

The first mixture was prepared by dissolving a sorbitan ester surfactant (<1 wt%) in 200 mL of hexamethyldisiloxane, then adding a 6 wt% pre-prepared water glass solution (pH 12-14). The resulting emulsion was heated to 35°C. The second mixture was prepared by dissolving a sorbitan ester surfactant (<1 wt%) in hexamethyldisiloxane (HMDSO) with stirring, then adding $HNO_3$ solution to give a pH of about 0-1. To simultaneously initiate gelation and silylation, the second mixture was continuously added to the main mixture so that the aqueous phase (third polar phase) of the resulting third mixture had a pH that was less than 2. Once the addition of the second mixture was complete, the resulting mixture was heated to approximately 45 °C. After stirring at 45 °C, isopropanol was added and the temperature increased to 70 °C. After stirring, the solution was transferred into a separating funnel, where the aqueous phase was removed (thereby separating the third polar phase from the third apolar phase), and the organic layer (the third apolar phase) was transferred into a crystallising dish and dried in ambient pressure at >150 °C. The whole process took less than 5 hours.

### Example 2

The procedure of Example 1 was repeated, except that additional $HNO_3$ solution was added to the third mixture after addition of phase transfer agent and the third mixture was stirred for longer so that the whole process took less than 9 hours. The additional acid treatment reduced the pH of the third polar phase to lower than 1.5.

### Example 3

Example 2 was repeated at 50x scale in terms of reagents. Timings were kept substantially the same.

### Comparative Example 1

Comparative Example 1 is a commercially available silica aerogel understood to be prepared by the process disclosed in US patent application publication no. US 2001/034375 A1 ("Organically modified aerogels, processes for their preparation by surface modification of the aqueous gel, without prior solvent exchange, and subsequent drying, and their use"). The process is summarised as follows: the synthesis of an organically modified aerogel starts with introducing an inorganic hydrogel formed at a pH greater than 3, followed by an ageing step. The hydrogel is then submitted to a surface modification by mixing the hydrogel with a silylating agent, possibly trimethylchlorosilane, to form a hydrophobic gel. The gel is then submitted to a drying step in order to obtain the organically modified silica aerogel.

### Comparative Example 2

Comparative Example 2 is a commercially available silica aerogel understood to be prepared by the process disclosed in US patent application publication no. US 2012/225003 A1 ("Method of preparing silica aerogel powder"). The process is summarised as follows: firstly, a dispersion is prepared by mixing a water glass solution with an organosilane compound (e.g. hexamethyldisilazane), in a nonpolar organic solvent. In order to start the gelation, and solvent exchange, an inorganic acid is added to the dispersion solution. The silica hydrogel is then dried to generate a silica aerogel powder.

### Results

Various properties of the aerogel products of Examples 1-3 and Comparative Examples 1 and 2 are disclosed in Table 1.

Table 1 - Experimental Results

| Example # | Tap density (g/mL) | Yield (g) | Carbon content (wt%) | Thermal conductivity ($10^{-3}$ W/mK) |
|---|---|---|---|---|
| Example 1 | 0.133 | 7.725 | 10.92 | 17.0 |
| Example 2 | 0.117 | 10.444 | 11.27 | 15.4 |
| Example 3 | 0.16 | 528.48 | | 17.1 |
| Comparative Example 1 | 0.085 | | | 16.5 |
| Comparative Example 2 | 0.106 | | | 19.2 |

The data derived from the XRS analysis are summarised in Table 2. According to A. Emmerling and J. Fricke, "Small angle scattering and the structure of aerogel", J. Non-Cryst. Solids, 145 (1992), pp. 13-10 and Li et al. "Continuous adjustment of fractal dimension of silica aerogels", J. Non-Cryst.Solids, 499 (2018), pp. 159-166, the distinct structural properties can be linked to the scattering pattern's characteristics on the corresponding length scale. The two crossovers of the curve separating the power-law regions can be correlated with the mean size of the secondary particles, or cluster, that connect with each other to form the silica network, and of the primary particles, which are the smallest constituent particle in the solid-phase network of a gel or aerogel, and will form the secondary particles. By using the Porod regime, the specific surface area, S/m, can be calculated.

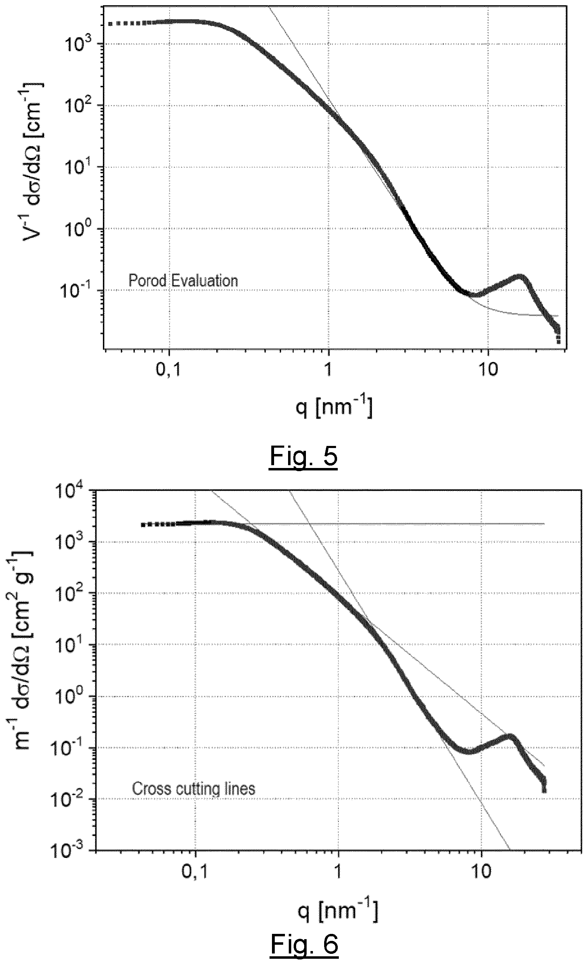

It is believed that the significant difference observed in the pore volume between Examples 2 and 3 and Comparative Examples 1 and 2, as obtained by XRS, is due the presence of a higher amount of smaller pores in the silica aerogels for Examples 2 and 3. It is believed that those pores remain intact throughout the drying due to their hydrophobisation during the simultaneous gelation and hydrophobisation. This is believed to be a result of the pre-activation of HMDSO during the gelation step, which allows a more effective silylation of smaller pores during said gelation step, as they would otherwise be inaccessible in later stages of the process. Minimising pore collapse is expected to provide improved thermal performance and a greater number of small pores in the final aerogel product. The understanding that the material of the present invention features a higher amount of smaller pores is also corroborated by the significant difference observed between the two different surface area values (Porod evaluation and Cross-Cutting Lines method) determined by XRS shown in Table 2 for Examples 2 and 3. Examples of curve-fitting for Porod and cross-cutting lines analysis of the sample of Comparative Example 1 are shown in Figures 5 and 6. While Comparative Examples 1 and 2 also present a difference between those values, the Porod Evaluation values obtained for Examples 2 and 3 are almost double the value obtained by the Cross-Cutting Lines method. The difference in these values is mainly attributed to the fact that the Porod evaluation is able to measure the surface area of domains in the nano-scale, which includes small pores, and closed pores, that are not accessible by other techniques, such as nitrogen sorption analysis.

The cross-cutting lines surface area values obtained by the intersection of the different slopes on the scattering curve are closer to the ones determined by nitrogen sorption analysis, shown in Tables 3a and 3b. The differences between the samples in terms of cross-cutting lines surface area are less significant, indicating that, in the range measured by nitrogen sorption analysis, the samples have a similar type of porosity/pore size distribution. This is also supported by the results of pore volume by nitrogen sorption analysis ($V_{pore(N2)}$), in which the products of Examples 2 and 3 have closer values to Comparative Example 2, and lower than Comparative Example 1.

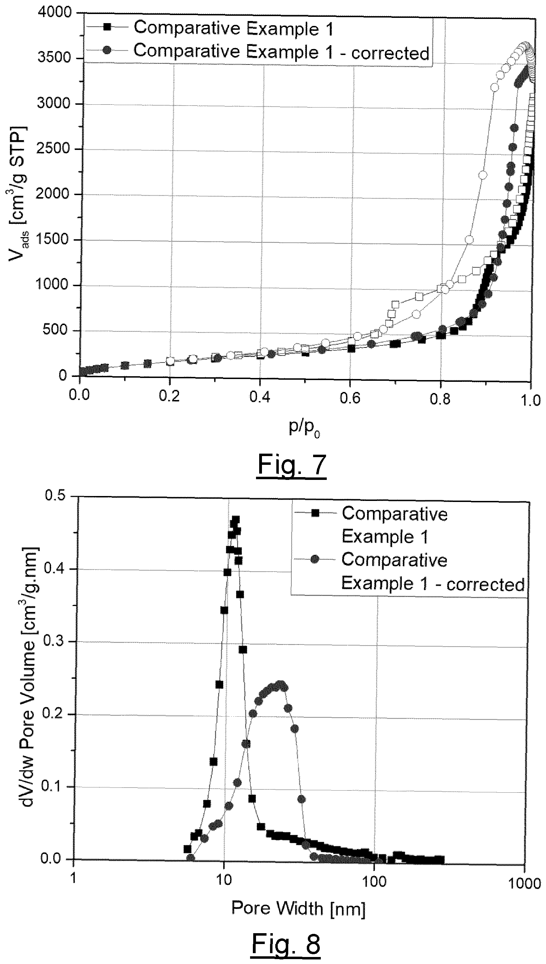

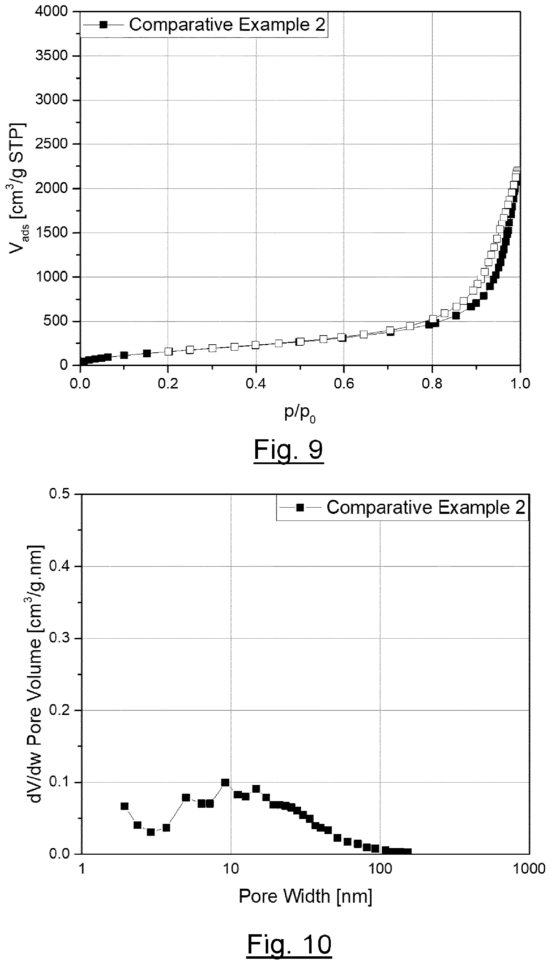

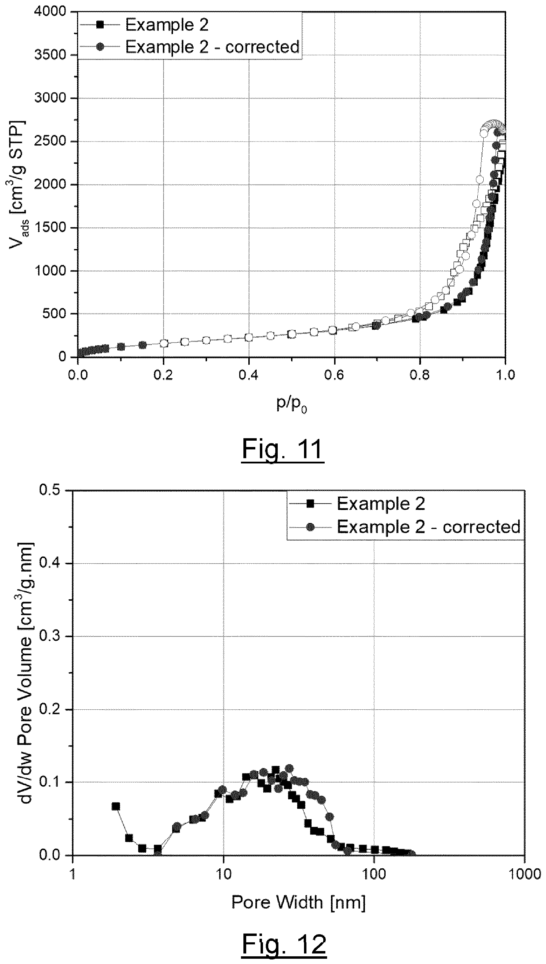

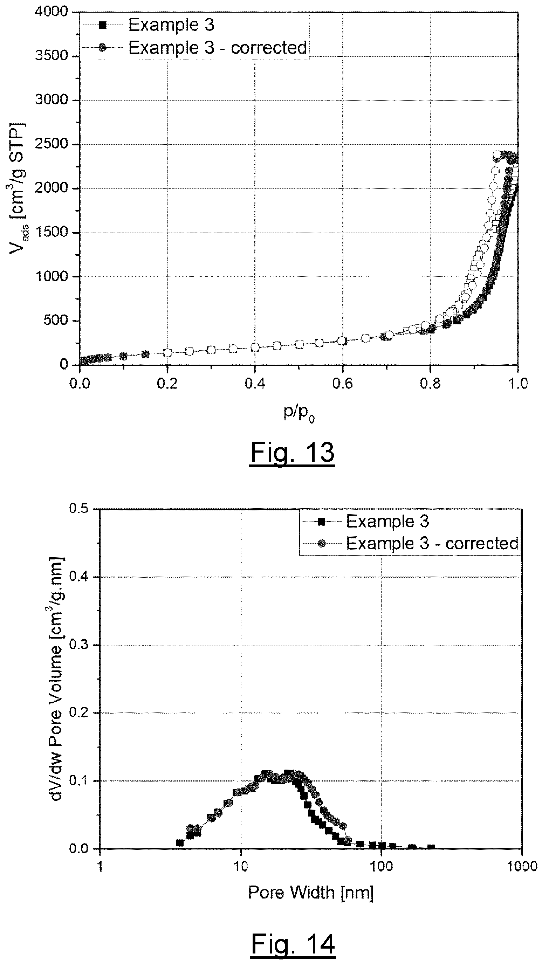

Figures 7, 9, 11 and 13 show $N_2$ sorption isotherms ($V_{ads}$ plotted against p/p0) for the product samples of Comparative Examples 1 and 2, and Examples 2 and 3, respectively. Where correction according to the method disclosed herein is possible, corrected isotherms are also shown ($V_{ads,korr}$ plotted against p/p0). $V_{ads}$ at p/p0=1 is reported for each sample in Table 3a below ($V_{p/p0=1}$). Figures 8, 10, 12 and 14 show plots of pore volume distribution (PVD) against pore width, according to the BJH method. Where correction according to the method disclosed herein is possible, corrected plots are also shown ($PVD_{korr}$ plotted against pore width). In the pore size distributions, it can be seen that the products of Examples 2 and 3 have larger cumulative volumes of pores smaller than 10 nm than the product of Comparative Example 1. The smallest pores measured in Examples 2 and 3 have widths around 4.37 to 4.94, while the smallest pores from Comparative Example 1 present a width of 6.95 nm. For Comparative Example 2 it was not possible to estimate average pore sizes, as the sample presents larger pores on the edge of, and just outside, the measurement range of nitrogen sorption analysis. The presence of such larger pores is evidenced by the shape of the measured nitrogen sorption isotherm. In particular, for the sample of Comparative Example 2, it is not possible to identify point V2 (adsorption branch crossover), and point V4 (desorption breakthrough) is almost unidentifiable. A consequence of the larger pores of this sample is that extrapolation to p/p0=1 (point V3) does not cover the whole pore volume and is thus not valid.

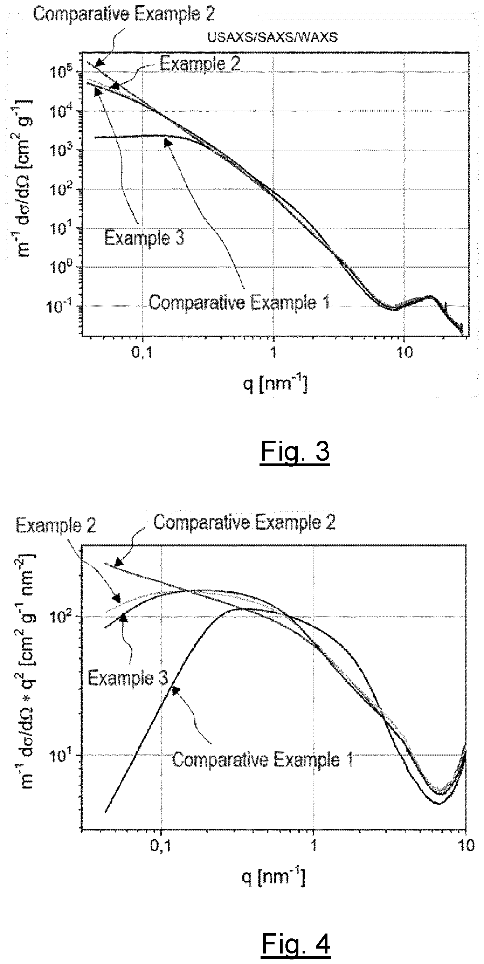

The combination of all these data suggests that Comparative Example 1 has a large pore volume by nitrogen sorption analysis ($V_{pore(N2)}$). Comparative Example 2 presents a significant amount of larger pores (structures >100 nm - outside the equipment measuring range) which prevents the full analysis of the data (both for XRS analysis and nitrogen sorption). While the products of Examples 2 and 3 also have porosity by nitrogen sorption analysis (reflected by the $V_{pore(N2)}$ values), those products have a significant amount of smaller pores, particularly in comparison to the other samples, leading to higher surface areas and total pore volume, as determined by XRS analysis. Further analysis of the pore size distribution based on the plot of PVD against pore width also shows a wider pore size distribution for the products of Examples 2 and 3 (see $d_{range(0.5)}$ in Table 3b below), as well as a lower $d_{min(0.5)}$ indicative of the presence of smaller pores. The combination of the presence of smaller pores in the products of Examples 2 and 3 with unique primary particle and cluster diameters leads to a distinct profile when analysed by XRS, as shown in Figures 3 and 4. For example, Figures 3 and 4 indicate the presence of larger pores (pores with a width above 100 nm) in the sample of Comparative Example 2 in particular. As shown in Figure 4, the gradient of the plot of differential scattering cross-section against q is negative for the sample of Comparative Example 2 in the region q < 0.1 nm$^{-1}$, whereas the gradient is positive for the samples of Examples 2 and 3. Furthermore, a maximum vertex is identifiable in that plot between q = 0.1 and 1 nm$^{-1}$ for Examples 2 and 3. It is also believed that the presence of smaller pores in the products of Examples 2 and 3 contributes to the thermal performance of the silica aerogels: regardless of the presence of impurities the materials are still able to present thermal conductivities below 20 mW/mK.

Table 2 - XRS analysis results.

| Parameter | Porod Evaluation | Cross-Cutting Lines | | | Absolute Scale Method | |
| --- | --- | --- | --- | --- | --- | --- |
| | Surface Area (S/m) ($m^2$/g) | Average Cluster Diameter (nm) | Average Primary Particle Diameter (nm) | Surface Area (S/m) ($m^2$/g) | Density PXRS (g/$cm^3$) | Pore Volume ($V_{pore(XRS)}$) ($cm^3$/g) |
| Comparative Example 1 | 863 | 25.7 | 5.1 | 650 | 0.245 | 3.52 |
| Comparative Example 2 | 1175 | 167.6 | 3.9 | 862 | 0.224 | 3.91 |
| Example 2 | 1283 | 87.3 | 5.3 | 634 | 0.124 | 7.54 |
| Example 3 | 1183 | 69.1 | 5.6 | 592 | 0.168 | 5.14 |

Tables 3a and 3b (following page) - Nitrogen sorption analysis results. Note that values marked * (reported for Comparative Example 2) are not comparable with values for the other samples because pores were found outside the measurable range. Thus, for that sample, it is not possible to reliably perform nitrogen sorption analysis in order to extract structural data.

Table 3a

| | Surface Area ($S_{BET}$) ($m^2$/g) | Density ($\rho$) (g/$cm^3$) | Extrapolated gas volume ($V_{p/p0=1}$) ($cm^3$/g) | Pore Volume ($V_{pore(N2)}$) ($cm^3$/g) | Average Pore Diameter (average pore width) (nm) |
| --- | --- | --- | --- | --- | --- |
| Comparative Example 1 | 730 | 0.182 | 3190 | 4.93 | 27.0 |
| Comparative Example 2 | 665* | 0.235* | 2390* | 3.70* | 22.2* |
| Example 2 | 656 | 0.211 | 2700 | 4.18 | 25.5 |
| Example 3 | 573 | 0.241 | 2326 | 3.60 | 25.1 |

Table 3b

| | $d_{PVDmax}$ (nm) | $PVD_{max}$ ($cm^3$/g·nm) | $PVD_{0.5}$ ($cm^3$/g·nm) | $d_{min(0.5)}$ (nm) | $d_{max(0.5)}$ (nm) | $d_{range(0.5)}$ (nm) |
| --- | --- | --- | --- | --- | --- | --- |
| Comparative Example 1 | 20.87 | 0.332 | 0.166 | 11.76 | 28.45 | 16.69 |
| Comparative Example 2 | | | | | | |
| Example 2 | 27.40 | 0.119 | 0.059 | 7.80 | 48.68 | 40.88 |
| Example 3 | 25.86 | 0.109 | 0.054 | 7.09 | 39.61 | 32.52 |

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

**Claims**

1. A silica aerogel having a pore volume of at least about 4 $cm^3/g$, preferably at least about 5 $cm^3/g$, wherein the pore volume is determined by X-Ray Scattering (XRS) analysis ($V_{pore(XRS)}$).

2. A silica aerogel according to claim 1, wherein the pore volume is of pores having a width of no more than about 100 nm, such as no more than about 70 nm.

3. A silica aerogel according to claim 1 or claim 2, wherein the silica aerogel has a density of no more than about 0.21 $cm^3/g$, preferably no more than 0.2 $g/cm^3$, as determined by XRS analysis ($\rho XRS$).

4. A silica aerogel according to any preceding claim, wherein the silica aerogel is a silylated silica aerogel comprising silyl groups bonded to surfaces of a porous silica framework, wherein the silyl groups are represented by the formula -SiRR'R" wherein at least one of R, R' and R" are an organic group comprising at least one SiC bond, and wherein the silica aerogel has a carbon content determined by $^1H$ NMR spectroscopy of from about 2 wt% to about 25 wt%, preferably from about 5 wt% to about 15 wt%.

5. A silica aerogel according to any preceding claim, having at least one of:

    an average primary particle diameter of at least about 5.2 nm, as determined by XRS analysis;
    an average cluster diameter of from about 35 to about 150 nm, such as about 50 to about 100 nm, as determined by XRS analysis; and/or
    a surface area of no more than about 640 $m^2/g$, by XRS cross-cutting lines analysis.

6. A silica aerogel according to any preceding claim, having a Porod surface area of at least about 1180 $m^2/g$, as determined by XRS analysis.

7. A silica aerogel according to any preceding claim, having a Porod surface area and a surface area determined by XRS cross-cutting lines analysis, wherein the Porod surface area is at least 1.5 times the surface area determined by XRS cross-cutting lines analysis.

8. A silica aerogel according to any preceding claim, having a surface area ($S_{BET}$) of no more than about 660 $m^2/g$, such as from about 400 $m^2/g$ to 660 $m^2/g$, as determined by nitrogen sorption analysis.

9. A silica aerogel according to any preceding claim, wherein the silica aerogel has:

    a minimum pore width less than 7 nm, such as less than 6 nm, as determined by nitrogen sorption analysis; and/or
    a pore volume of at least 0.01 $cm^3/g$ for pores having a pore width below 7 nm, such as less than 6 nm, as determined by nitrogen sorption analysis.

10. A silica aerogel according to any preceding claim, wherein the silica aerogel has:

    a positive gradient in a double-logarithmic plot of differential scattering cross-section $m^{-1} \cdot d\sigma/d\Omega$, vs scattering vector q for values of q below 0.1 $nm^{-1}$ by XRS analysis,
    an identifiable adsorption branch crossover point (V2) in a nitrogen sorption isotherm,
    an identifiable desorption breakthrough point (V4) in a nitrogen sorption isotherm, and/or
    nitrogen sorption extrapolation to p/p0=1 (V3) covers substantially the whole pore volume of the aerogel;

    wherein the silica aerogel additionally has:

    a Porod surface area of at least about 900 $m^2/g$, such as at least about 1000 $m^2/g$ by XRS analysis;
    an average cluster diameter of at least about 35 nm, such as at least about 50 nm, by XRS analysis;
    a surface area ($S_{BET}$) by nitrogen sorption analysis of no more than about 700 $m^2/g$, such as no more than about 680 $m^2/g$;
    a density of at least 0.2 $g/cm^3$ by nitrogen sorption analysis;
    a pore volume ($V_{pore(N2)}$) by nitrogen sorption analysis of no more than about 4.8 $cm^3/g$, such as no more than about 4.4 $cm^3/g$; and/or
    an average pore width by nitrogen sorption analysis of no more than 26.5 nm, such as no more than 26 nm.

11. A silica aerogel according to any preceding claim, wherein the silica aerogel has one or more of:

a $PVD_{max}$ of no more than about 0.25 $cm^3$/g·nm, such as no more than about 0.2 $cm^3$/g·nm, as determined by nitrogen sorption analysis with correction according to the method disclosed herein;

a $PVD_{0.5}$ of no more than about 0.11 $cm^3$/g·nm, such as no more than about 0.1 $cm^3$/g·nm, as determined by nitrogen sorption analysis with correction according to the method disclosed herein;

a $d_{min(0.5)}$ of no more than about 11 nm, such as no more than about 10 nm, as determined by nitrogen sorption analysis with correction according to the method disclosed herein;

a $d_{max(0.5)}$ of at least about 30 nm, such as at least about 34 nm, as determined by nitrogen sorption analysis with correction according to the method disclosed herein; and/or

a $d_{range(0.5)}$ of at least about 18 nm, such as at least about 25 nm, as determined by nitrogen sorption analysis with correction according to the method disclosed herein.

12. A silica aerogel according to any preceding claim, having a thermal conductivity of no more than about 20 mW/mK.

13. A silica lyogel suitable for forming the aerogel of any of claims 1 to 12 by drying to remove solvent from pores of the lyogel.

14. An admixture comprising:

i) a silica aerogel according to any one of claims 1 to 12, or a silica lyogel according to claim 13, and
ii) a plurality of fibres;
wherein at least a portion of the silica aerogel or silica lyogel is chemically bonded to at least a portion of the plurality of fibres;
optionally wherein the admixture comprises at least 10 wt% fibres, and at least 10 wt % silica lyogel or silica aerogel.

15. An insulation product comprising a silica aerogel according to any one of claims 1 to 12, wherein the insulation product is an admixture of the silica aerogel and fibres, an insulation board or an insulation blanket.

16. An insulation product comprising a dried lyogel according to claim 13, optionally wherein the lyogel is provided in an admixture comprising the lyogel and a fibres, and/or optionally wherein the insulation product is an insulation board or an insulation blanket.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Europäisches
Patentamt

European
Patent Office

Office européen
des brevets

# EUROPEAN SEARCH REPORT

**Application Number**

EP 24 15 8232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAO A. PARVATHY ET AL: "Hydrophobic and physical properties of the ambient pressure dried silica aerogels with sodium silicate precursor using various surface modification agents", APPLIED SURFACE SCIENCE, vol. 253, no. 14, 1 May 2007 (2007-05-01), pages 6032-6040, XP093193438, Amsterdam , NL ISSN: 0169-4332, DOI: 10.1016/j.apsusc.2006.12.117 * Experimental; figure 1; table 2 * * the whole document * | 1-13 | INV. C01B33/158 C01B33/1585 |
| X | DUAN YANNAN ET AL: "Hydrophobic silica aerogels by silylation", JOURNAL OF NON-CRYSTALLINE SOLIDS, vol. 437, 1 April 2016 (2016-04-01), pages 26-33, XP093193486, NL ISSN: 0022-3093, DOI: 10.1016/j.jnoncrysol.2016.01.016 Retrieved from the Internet: URL:https://www.sciencedirect.com/science/article/pii/S0022309316300175/pdfft?md5=2ed8711bb4ab29267d16f8af33327672&pid=1-s2.0-S0022309316300175-main.pdf> * Experimental; figure 1; table 1 * * the whole document * | 1-13 | **TECHNICAL FIELDS SEARCHED (IPC)** C01B |

-/--

The present search report has been drawn up for all claims

| Place of search | Date of completion of the search | Examiner |
|---|---|---|
| The Hague | 9 August 2024 | Eren, Hamit |

EPO FORM 1503 03.82 (P04C01)

| | Europäisches<br>Patentamt<br>European<br>Patent Office<br>Office européen<br>des brevets | **EUROPEAN SEARCH REPORT** | **Application Number**<br>EP 24 15 8232 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| T | REICHENAUER G ET AL: "Nitrogen sorption in aerogels",<br>JOURNAL OF NON-CRYSTALLINE SOLIDS,<br>vol. 285, no. 1-3,<br>1 June 2001 (2001-06-01), pages 167-174,<br>XP093193484,<br>NL<br>ISSN: 0022-3093, DOI:<br>10.1016/S0022-3093(01)00449-5<br>Retrieved from the Internet:<br>URL:https://www.sciencedirect.com/science/article/pii/S0022309301004495/pdfft?md5=5a7e5ce3004b4335551f8d228b8d6c8d&pid=1-s2.0-S0022309301004495-main.pdf><br>* Experimental setup *<br>* the whole document *<br>----- | | |
| T | RAO A. PARVATHY ET AL: "Effect of preparation conditions on the physical and hydrophobic properties of two step processed ambient pressure dried silica aerogels",<br>JOURNAL OF MATERIAL SCIENCE,<br>vol. 40, no. 13, 1 July 2005 (2005-07-01),<br>pages 3481-3489, XP093193482,<br>Dordrecht<br>ISSN: 0022-2461, DOI:<br>10.1007/s10853-005-2853-3<br>Retrieved from the Internet:<br>URL:https://link.springer.com/content/pdf/10.1007/s10853-005-2853-3.pdf><br>* Characterization, experimental *<br>* the whole document *<br>----- | | TECHNICAL FIELDS<br>SEARCHED (IPC) |

-/--

The present search report has been drawn up for all claims

| Place of search | Date of completion of the search | Examiner |
|---|---|---|
| The Hague | 9 August 2024 | Eren, Hamit |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................................
& : member of the same patent family, corresponding
   document

EPO FORM 1503 03.82 (P04C01)

page 2 of 4

Europäisches
Patentamt

European
Patent Office

Office européen
des brevets

**EUROPEAN SEARCH REPORT**

**Application Number**

EP 24 15 8232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI XIAOLEI ET AL: "Effect of sepiolite fiber on the structure and properties of the sepiolite/silica aerogel composite", JOURNAL OF SOL-GEL SCIENCE AND TECHNOLOGY, vol. 67, no. 3, 1 September 2013 (2013-09-01), pages 646-653, XP093193530, US ISSN: 0928-0707, DOI: 10.1007/s10971-013-3124-4 Retrieved from the Internet: URL:https://link.springer.com/content/pdf/10.1007/s10971-013-3124-4.pdf> * Abstract * * the whole document * ----- | 14 | |
| X | NOCENTINI KEVIN ET AL: "Hygro-thermal properties of silica aerogel blankets dried using microwave heating for building thermal insulation", ENERGY, vol. 158, 1 January 2018 (2018-01-01), pages 14-22, XP093193539, AMSTERDAM, NL ISSN: 0378-7788, DOI: 10.1016/j.enbuild.2017.10.024 Retrieved from the Internet: URL:https://www.sciencedirect.com/science/article/pii/S037877881730350X/pdfft?md5=d3ab794ad3044f663fefc804281e4101&pid=1-s2.0-S037877881730350X-mainext.pdf> * Abstract * * the whole document * ----- | 15,16 | TECHNICAL FIELDS SEARCHED (IPC) |

-/--

The present search report has been drawn up for all claims

| Place of search | Date of completion of the search | Examiner |
|---|---|---|
| The Hague | 9 August 2024 | Eren, Hamit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 4

Europäisches
Patentamt

European
Patent Office

Office européen
des brevets

**EUROPEAN SEARCH REPORT**

**Application Number**

EP 24 15 8232

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YI ZHEHAN ET AL: "Super-insulated, flexible, and high resilient mullite fiber reinforced silica aerogel composites by interfacial modification with nanoscale mullite whisker", COMPOSITES PART B, vol. 230, 1 February 2022 (2022-02-01), page 109549, XP093193541, AMSTERDAM, NL ISSN: 1359-8368, DOI: 10.1016/j.compositesb.2021.109549 Retrieved from the Internet: URL:https://www.sciencedirect.com/science/article/pii/S135983682100915X/pdfft?md5=6a208bb137cd09277d7a976e00d2f2c5&pid=1-s2.0-S135983682100915X-main.pdf> * Abstract * * the whole document * | 15,16 | |
| | ----- | | |
| | | | **TECHNICAL FIELDS SEARCHED (IPC)** |

The present search report has been drawn up for all claims

| Place of search | Date of completion of the search | Examiner |
|---|---|---|
| The Hague | 9 August 2024 | Eren, Hamit |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

........................................................................................
& : member of the same patent family, corresponding
　　document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3015645 A
- US 7470725 B2
- WO 2008143384 A1
- US 8961919 B2
- WO 2019076977 A1
- US 10351434 B2
- US 20180044188 A1
- US 10766779 B2
- US 2001034375 A1
- US 2012225003 A1

### Non-patent literature cited in the description

- Springer Handbook of Aerogels. Springer Nature
- **S. ZHAO et al.** Phase transfer agents facilitate the production of super insulating silica aerogel powders by simultaneous hydrophobization and solvent- and ion-exchange. *Chemical Engineering Journal*, 2020, vol. 381, 122421
- **K.J. LEE et al.** Fast synthesis of spherical silica aerogel powders by emulsion polymerization from water glass. *Chemistry Select*, 2018, vol. 3, 1257-1261
- **M. DE FÁTIMA JÚLIO et al.** Superhydrophobic hybrid aerogel powders from waterglass with distinctive applications. *Microporous Mesoporous Mater*, 2014, vol. 199, 29-39
- **L. HUBER et al.** Fast and minimal-solvent production of super insulating silica aerogel granulate. *Angew. Chem. Int. Ed*, 2017, vol. 56, 4753-4756
- **M.M. KOEBEL et al.** Breakthroughs in costeffective scalable production of super insulating, ambient-dried silica aerogel and silica-bio-polymer hybrid aerogels: from laboratory to pilot scale. *J. Sol-Gel Sci. Technol.*, 2016, vol. 79, 308-318
- **S. DE POOTER et al.** Optimized synthesis of ambient pressure dried thermal insulating silica aerogel powder from non-ion exchanged water glass. *J. Non-Cryst. Solids*, 2018, vol. 499, 217-226
- **M. FIROOZMANDAN et al.** Performance of water glass-based silica aerogel for adsorption of phenol from aqueous solution. *J. Sol-Gel Sci. Technol.*, 2016, vol. 79, 67-75
- **MALFAIT, W. J.** ; **VEREL, R** ; **KOEBEL, M. M.** Hydrophobization of silica aerogels: insights from quantitative solid-state NMR spectroscopy. *The Journal of Physical Chemistry C*, 2014, vol. 118 (44), 25545-25554
- **SCHERDEL et al.** Advances in the Development of Sol-Gel Materials Combining Small-Angle X-ray Scattering (SAXS) and Machine Learning (ML). *Processes*, 2021, vol. 9 (4), 672
- **REICHENAUER, G** ; **G.W. SCHERER**. Extracting the pore size distribution of compliant materials from nitrogen adsorption. *Colloids and Surfaces A - Physicochemical and Engineering Aspects*, 2001, vol. 187, 41-50
- **G. REICHENAUER** ; **G.W. SCHERER**. Nitrogen adsorption in compliant materials. *Journal of Non-Crystalline Solids*, 2000, vol. 277, 162-172
- **G. REICHENAUER** ; **G.W. SCHERER**. Nitrogen sorption in aerogels. *Journal of Non-Crystalline Solids*, 2001, vol. 285, 167-174
- **G. REICHENAUER** ; **G.W. SCHERER**. Extracting the pore size distribution of compliant materials from nitrogen adsorption. *Colloids and Surfaces A-Physicochemical and Engineering Aspects*, 2001, vol. 187, 41-50
- **A. EMMERLING** ; **J. FRICKE**. Small angle scattering and the structure of aerogel. *J. Non-Cryst. Solids*, 1992, vol. 145, 13-10
- **LI et al.** Continuous adjustment of fractal dimension of silica aerogels. *J. Non-Cryst.Solids*, 2018, vol. 499, 159-166